(19) Europäisches Patentamt / European Patent Office / Office européen des brevets

(11) **EP 4 371 782 B1**

(12) **EUROPEAN PATENT SPECIFICATION**

(45) Date of publication and mention
of the grant of the patent:
**13.08.2025  Bulletin 2025/33**

(51) International Patent Classification (IPC):
**B60C 1/00** *(2006.01)*        **C08C 19/02** *(2006.01)*
**C08K 3/04** *(2006.01)*

(21) Application number: **23205156.5**

(22) Date of filing: **23.10.2023**

(52) Cooperative Patent Classification (CPC):
(C-Sets available)
**B60C 1/0016; B60C 11/005**                    (Cont.)

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **18.11.2022  JP 2022184845**

(43) Date of publication of application:
**22.05.2024  Bulletin 2024/21**

(73) Proprietor: **Sumitomo Rubber Industries, Ltd.
Kobe-shi, Hyogo 651-0072 (JP)**

(72) Inventor: **TOKIMUNE, Ryuichi
Kobe-shi, 651-0072 (JP)**

(74) Representative: **Manitz Finsterwald
Patent- und Rechtsanwaltspartnerschaft mbB
Martin-Greif-Straße 1
80336 München (DE)**

(56) References cited:
**EP-A1- 3 919 289        JP-A- 2022 086 476
US-A1- 2020 189 318        US-A1- 2022 194 126**

(52) Cooperative Patent Classification (CPC): (Cont.)

C-Sets
**C08L 7/00, C08L 9/00, C08L 91/00, C08L 91/06,**
**C08K 5/18, C08K 5/09, C08K 3/22, C08K 3/06,**
**C08K 5/47, C08K 3/36, C08K 5/548;**
**C08L 9/06, C08L 7/00, C08L 9/00, C08L 91/00,**
**C08L 57/02, C08L 57/02, C08L 91/06, C08K 5/18,**
**C08K 5/09, C08K 3/22, C08K 3/06, C08K 5/47,**
**C08K 5/31, C08K 3/36, C08K 5/548;**
**C08L 9/06, C08L 7/00, C08L 9/00, C08L 91/00,**

**C08L 57/02, C08L 91/06, C08K 5/18, C08K 5/09,**
**C08K 3/22, C08K 3/06, C08K 5/47, C08K 5/31,**
**C08K 3/36, C08K 5/548;**
**C08L 9/06, C08L 9/00, C08L 7/00, C08L 91/00,**
**C08L 57/02, C08L 57/02, C08L 91/06, C08K 5/18,**
**C08K 5/09, C08K 3/22, C08K 3/06, C08K 5/47,**
**C08K 5/31, C08K 3/36, C08K 5/548;**
**C08L 9/06, C08L 9/00, C08L 7/00, C08L 91/00,**
**C08L 57/02, C08L 91/06, C08K 5/18, C08K 5/09,**
**C08K 3/22, C08K 3/06, C08K 5/47, C08K 5/31,**
**C08K 3/36, C08K 5/548**

**Description**

TECHNICAL FIELD

The present invention relates to a tire.

BACKGROUND OF THE INVENTION

Ride comfort during running is given as one example of performances required for a tire. JP 2021-160669 A discloses a tire having improved ride comfort and the like by providing the tire with a predetermined band layer.

SUMMARY OF THE INVENTION

Recently, since expressways have been developed and a vehicle performance has been also improved, a long-distance travel at a high speed has not been uncommon, and an improvement of ride comfort during high-speed running has been particularly required.
It is an object of the present invention to provide a tire with improved ride comfort during high-speed running.
The present invention relates to the following tire:

A tire comprising a tread part,
wherein the tread part comprises

a first layer constituting a tread surface, and
a second layer adjacent to an inner side of the first layer in a tire radial direction,

wherein each of the first layer and the second layer is composed of a rubber composition comprising a rubber component and a recovered carbon black, and
wherein B/C is greater than 1.0, where a content of the recovered carbon black based on 100 parts by mass of a rubber component of a rubber composition constituting the first layer is referred to as C, in parts by mass, and a content of the recovered carbon black based on 100 parts by mass of a rubber component of a rubber composition constituting the second layer is referred to as B, in parts by mass.

According to the present invention, provided is a tire with improved ride comfort during high-speed running.

BRIEF DESCRIPTION OF THE DRAWINGS

FIG. 1 is a view showing a cross section of a tread part of a tire passing through a tire rotation axis.
FIG. 2 is a schematic view of a ground-contacting surface of a tire when a tread part is pressed against a flat surface.
FIG. 3 is a schematic view of a ground-contacting surface of a tire that is another embodiment.

DETAILED DESCRIPTION

A tire that is one embodiment of the present invention is a tire comprising a tread part, wherein the tread part comprises a first layer constituting a tread surface, and a second layer adjacent to an inner side of the first layer in a tire radial direction, wherein each of the first layer and the second layer is composed of a rubber composition comprising a rubber component and a recovered carbon black, and wherein B/C is greater than 1.0, where a content of the recovered carbon black based on 100 parts by mass of a rubber component of a rubber composition constituting the first layer is referred to as C, in parts by mass, and a content of the recovered carbon black based on 100 parts by mass of a rubber component of a rubber composition constituting the second layer is referred to as B, in parts by mass.
For example, a mechanism by which the tire of the present invention can achieve improvement of ride comfort during high-speed running is considered as follows, although the following consideration is not intended to be bound by any theory.
First, (1) in the case where the rubber compositions constituting the tread part comprise a recovered carbon black, it is considered that a state where the rubber components bind to the recovered carbon black is achieved due to physical adsorption of the recovered carbon black. Additionally, (2) as it is considered that a surface of a recovered carbon black becomes less active during production of the recovered carbon black as compared with a normal carbon black, it becomes easy for microscopic friction to occur between the surface of the recovered carbon black and rubber molecular chains when vibration occurs in the tread part, and it becomes easy to absorb shock from a road surface. Moreover, (3) in the case where the tread part comprises two or more rubber layers and an amount of a recovered carbon black based on 100 parts by mass of the rubber component of the second layer adjacent to the inner side of the first layer in the tire radial direction is greater than an amount of a recovered carbon black based on 100 parts by mass of the rubber component of the first layer constituting the outermost surface of the tread part, microscopic friction between the recovered carbon black and rubber molecular chains more easily occurs inside the tread part than the outermost surface of the tread part, so that shock from a road surface that the outermost surface layer of the tread part cannot absorb enough is easily absorbed by the inner part of the tread part. Then, with cooperation of the above-described (1) to (3), it is considered that the tire of the present invention can improve in ride comfort during high-speed running.

When a thickness of the first layer is referred to as t1, in mm, and a thickness of the second layer is referred to as t2, in mm, a ratio of t2 to a sum of t1 and t2 (t2/(t1+t2)) is preferably 0.20 or more.

When t2/(t1+t2) is 0.20 or more, a ratio of the thickness of the second layer in the tread part can be increased, so that it is considered that shock can be easily absorbed by the second layer. However, when the thickness of the second layer becomes too thick, it becomes easy for the second layer to generate heat during running, the temperature of the rubber becomes high, and shock absorbency of the entire tread part becomes low, so that it is considered that the second part becomes less likely to absorb shock. Accordingly, t2/(t1+t2) is preferably 0.40 or less.

When the thickness of the first layer is referred to as t1, in mm, and the thickness of the second layer is referred to as t2, in mm, B×t2/(t1+t2) is preferably 3.0 or more.

The second layer is less likely to deform during running of a vehicle, and friction occurs between a recovered carbon black and rubber molecular chains due to vibration propagated from a surface. Moreover, when the second layer has a thickness of a certain extent, it becomes easy to absorb vibration inside the tread. Therefore, when the product of the ratio of the thickness of the second layer and the content of the recovered carbon black is equal to or greater than a certain value, it is considered that it becomes easy to absorb shock.

70°CE*2/70°CE*1 is preferably 0.70 or less, where a complex elastic modulus at 70°C of the rubber composition constituting the first layer is referred to as 70°CE*1, in MPa, and a complex elastic modulus at 70°C of the rubber composition constituting the second layer is referred to as 70°CE*2, in MPa.

When 70°CE*2/70°CE*1 is within the above-described range, rigidity of the second layer can be made lower than rigidity of the first layer, and it is considered that it becomes easy for the first layer to deform on the inner side in the radial direction during running. Moreover, since it also becomes possible for the second layer to move while following deformation of the first layer, it is considered that E* of the second layer inside may be decreased.

A 100% modulus of the rubber composition constituting the first layer is preferably greater than a 100% modulus of the rubber composition constituting the second layer.

When rigidity of the second layer is lower than rigidity of the first layer, it also becomes possible for the second layer to move while following deformation of the first layer. Accordingly, it is considered that the 100% modulus of the second layer inside may be decreased.

70°CE*1/70°C tan δ1 is preferably 60 or more and 100 or less, where a tan δ at 70°C of the rubber composition constituting the first layer is referred to as 70°C tan δ1, and a complex elastic modulus at 70°C of the rubber composition constituting the first layer is referred to as 70°CE*1, in MPa.

When 70°CE*1/70°C tan δ1 is within the above-described range, an efficiency of absorption of vibration in the first layer is enhanced, and it is considered that ride comfort during high-speed running is further improved.

When a total styrene amount in the rubber component of the rubber composition constituting the first layer is referred to as S1, in % by mass, a product of t1 and S1 (t1×S1) is preferably 150 or less.

When a styrene part is present in the rubber, it is considered that a microscopic domain of the styrene part is formed in the rubber composition. When the styrene part is formed, energy loss occurs on interfaces of surrounding rubber phases, and it is considered that vibration can be easily absorbed. On the other hand, when an excess amount of the styrene part is formed, the temperature of the rubber composition becomes high due to heat accumulation during absorption of vibration, and it is considered that the efficiency of absorption of vibration is deteriorated. Accordingly, when t1×S1 is within the above-described range to make the product of the styrene and the thickness of the first layer equal to or less than a certain value, it is considered that vibration can be efficiently and easily absorbed while suppressing heat accumulation.

When a content of an isoprene-based rubber in the rubber component of the rubber composition constituting the first layer is referred to as I, in % by mass, a ratio of I to C (I/C) is preferably 1.0 or more.

When I/C is within the above-described range, dispersibility of the recovered carbon black in the rubber component in the first layer is improved, and it is considered that ride comfort during high-speed running is further improved.

A Shore hardness Hs of the rubber composition constituting the first layer is preferably greater than 60 and less than 80 and is preferably greater than a Shore hardness Hs of the rubber composition constituting the second layer.

When the rubber hardness is within the above-described range, it is considered that ride comfort during high-speed running is further improved.

The recovered carbon black is preferably a recovered carbon black resulting from firing of a waste tire and/or a waste tire tube.

When the recovered carbon black resulting from firing of a waste tire and/or a waste tire tube is used, it is considered that it becomes easy for the recovered carbon black to disperse in the rubber component of the rubber composition.

The waste tire and/or the waste tire tube preferably comprises a diene-based rubber.

When the waste tire and/or the waste tire tube comprises a diene-based rubber, it is considered that it becomes easy for the recovered carbon black to disperse in the rubber component of the rubber composition.

The tread part comprises a pair of shoulder land parts partitioned off by two or more circumferential grooves extending continuously in a tire circumferential direction, an outermost circumferential groove that is located on the outermost side in a tire width direction among the two or more circumferential grooves, and ground-contacting ends, and a center land part located between the pair of shoulder land parts. When, in mounting the tire to a vehicle, a center land part located on an inner side of the vehicle from a tire equator is referred to as an inner-side center land part, and a center land part located on an outer side of the vehicle from the tire equator is referred to as an outer-side center land part, an area of the inner-side center land part may be different from an area of the outer-side center land part. It is considered that ride comfort is further improved by such a tread pattern.

<Definition>

A "tread part" is a part forming a ground-contacting surface of a tire and is a member located on the outer side in the tire radial direction with respect to members forming a tire skeleton with steel or a textile material, such as a belt layer, a belt reinforcement layer, a carcass layer, and the like, on a cross section in the tire radial direction when the tire comprises these members.

A "thickness of each of rubber layers of a tread part" refers to a thickness of each lubber layer on a tire equator on a cross section obtained by cutting the tire along a plane including a tire rotation axis and is an average value of thicknesses of the tread measured at five sites by rotating the tire in 72 degree increments in a tire circumferential direction. For example, a thickness of the first layer refers to a direct distance in the tire radial direction from the tread outermost surface to an interface on the inner side of the first layer in the tire radial direction on the tire equator. Besides, when circumferential grooves are provided on the tire equator, the thickness of each of the rubber layers constituting the tread part is defined as a thickness of each rubber layer in a central part of a land part nearest to tire equator in the tire width direction. The "land part nearest to tire equator" refers to a land part having a groove edge of circumferential grooves present on the tire equator, the groove edge being nearest to the tire equator. When a plurality of such land parts are present, the thickness of each of the rubber layers constituting the tread part is defined as an average value of thicknesses of respective rubber layers in the central parts of these two land parts in the tire width direction. Moreover, when an electrically conductive member or the like is present on a land part present on the tire equator, which makes an interface unclear, the measurement is performed after virtually joining together interfaces blocked by the electrically conductive member or the like.

A groove width of each groove of a tread part is a maximum width of an opening of the groove on a tread outermost surface and can be obtained by a direct distance obtained by joining together the side ends of the tread outermost surface of the respective grooves on a cross section perpendicular to a center line of the both tread ends extending in a groove-extending direction. Here, the term "groove-extending direction" means a direction in which a groove extends continuously. For example, in a case where the groove is a circumferential groove, the groove-extending direction is a circumferential direction, and in a case where the groove is a groove inclined in a tire width direction, the groove-extending direction is a direction along an inclination in the tire width direction.

The term "recovered carbon black" refers to carbon black that obtained by pulverizing a product comprising carbon black such as a used tire and firing the pulverized product, in which, when the product is subjected to oxidative combustion by heating in the air, using a thermal weight measurement method according to JIS K 6226-2:2003, a ratio of a mass of ash (ash content), which is a component that does not combust, is 13% by mass or more. That is, a mass (carbon amount) of a lost content due to the oxidative combustion is less than 87% by mass. The recovered carbon black is also referred to as a "recycle carbon black" and may be also expressed by rCB.

The "standardized rim" is a rim, in a standard system including a standard on which a tire is based, defined for each tire by the standard. The standardized rim refers to, for example, a "standard rim" in applicable sizes described in "JATMA YEAR BOOK" in JATMA (Japan Automobile Tyre Manufacturers Association, Inc), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.). JATMA, ETRTO, and TRA are referred to in this order, and when an applicable size is found during reference to the standard, a standardized rim is based on that standard. Additionally, if the tire is not defined in the above-described standard system, the "standardized rim" refers to a rim having the smallest rim diameter and secondly having the narrowest rim width among rims that can be rim-assembled to the tire and retain internal pressure, that is, rims that do not cause air leakage between the rim and the tire.

A "standardized internal pressure" is an air pressure, in a standard system including a standard on which a tire is based, defined for each tire by each standard, i.e., the "MAXIMUM AIR PRESSURE" in JATMA, "INFLATION PRESSURE" in ETRTO, or the "maximum value" described in the table "TIRE LOAD LIMITS AT VARIOUS COLD INFLATION PRESSURES" in TRA. Like the standardized rim, JATMA, ETRTO, and TRA are referred to in this order, and when an applicable size is found during reference to the standard, a standardized internal pressure is based on that standard.

A "standardized load" means a load, in a standard system including a standard on which a tire is based, defined for each tire by the standard. The standardized internal pressure refers to, for example, the "MAXIMUN LOAD CAPACITY" in JATMA, "LOAD CAPACITY" in ETRTO or the "maximum value" described in the table "TIRE LOAD LIMITS AT VARIOUS COLD INFLATION PRESSURES" in TRA are standardized loads. Like the standardized rim and the standardized internal pressure, JATMA, ETRTO, and TRA are referred to in this order, and when an applicable size is found during reference to the standard, a standardized load is based on that standard. Additionally, in a case of a tire whose size is not defined in the standard, the standardized load WL, in kg, is calculated as follows. Besides, in the present specification, the "MAXIMUN LOAD CAPACITY" has the same meaning as that of the standardized load,

$$W_L = 0.000011 \times V + 175$$

$$V = [(Dt/2)^2 - (Dt/2 - Ht)^2] \times \pi \times Wt$$

where V represents a virtual volume of the tire, in mm³, Dt represents a tire outer diameter Dt, in mm, Ht represents a tire cross-sectional height, in mm, and Wt represents a tire cross-sectional width, in mm.

A "ground-contacting shape" is obtained by assembling a tire to a standardized rim, filling the tire with air at a standardized internal pressure, and leaving the tire to stand at 25°C for 24 hours, followed by applying ink to a tire tread surface, applying a standardized load to the tire to press the tire tread surface on cardboard (a camber angle is 0°), and performing transcription to a paper.

An "area of a center land part" refers to a total area of a ground-contacting shape of a center land part, that is, a total area of inked parts and does not include areas of lateral grooves and/or sipes crossing this land part.

A "softening agent" is a material giving a rubber component plasticity and is a component extracted from a rubber composition using acetone. Examples of the softening agent includes a softening agent that is a liquid (in a liquid state) at 25°C, and a softening agent that is a solid at 25°C. However, the examples of the softening agent shall not include wax and stearic acid commonly used in the tire industry.

A "content of a softening agent" also comprises an amount of a softening agent contained in an extended rubber component previously extended with the softening agent such as oil, a resin component, a liquid rubber component, and the like. Moreover, the same applies to a content of oil, a content of a resin component, and a content of a liquid rubber, and for example, in a case where the extending component is oil, the extending oil is included in the content of oil.

<Measuring method>

"70°C tan δ" is a loss tangent measured using a dynamic viscoelasticity measuring device (for example, EPLEXOR series manufactured by gabo Systemtechnik GmbH) under a condition of a temperature at 70°C, a frequency of 10 Hz, an initial strain of 5%, a dynamic strain of ±1%, and an extension mode. A sample for measurement of a loss tangent is a vulcanized rubber composition having a length of 20 mm, a width of 4 mm, and a thickness of 1 mm. In a case where the sample is prepared by being cut out of a tire, the sample is cut out of a tread part of the tire such that the tire circumferential direction becomes a long side and the tire radial direction becomes a thickness direction.

"70°CE*" is a complex elastic modulus measured using a dynamic viscoelasticity measuring device (for example, EPLEXOR series manufactured by gabo Systemtechnik GmbH) under a condition of a temperature at 70°C, a frequency of 10 Hz, an initial strain of 5%, a dynamic strain of ±1%, and an extension mode. A sample for measurement of 70°CE* is prepared in the same manner as in the case of 70°C tan δ.

A "styrene content" is a value calculated by $^1$H-NMR measurement and is applied to a rubber component having a repeating unit derived from styrene such as, for example, a SBR and the like. A "cis content (cis-1,4-bond butadiene unit amount)" is a value calculated in accordance with JIS K 6239-2:2017 by an infrared absorption spectrometry and is applied to a rubber component having a repeating unit derived from butadiene such as, for example, a BR and the like.

A "Shore hardness" is a Shore hardness Hs is measured at 23°C in accordance with JIS K 6253 while pressing a type A durometer against a sample from the ground-contacting-surface side. In a case where a sample for measurement of hardness is prepared from a test tire, the sample is cut out of a tread part forming a ground-contacting surface of the test tire such that a tire radial direction becomes a thickness direction.

A "100% modulus" is a stress at 100% elongation, in MPa, that is measured when, after preparing a No 7. dumbbell-shaped test piece with a thickness of 1 mm, a tensile test is performed in accordance with JIS K 6251 "Rubber, vulcanized or thermoplastics-Determination of tensile stress-strain properties" in an atmosphere at 23°C under a condition of a tension rate of 3.3 mm/sec. In a case where a sample for measurement of 100% modulus is prepared from a test tire, the sample is cut out of a tread part forming a ground-contacting surface of the test tire such that a tire radial direction becomes a thickness direction.

A "total styrene amount in the rubber component" is a total content, in % by mass, of the styrene units compounded in 100% by mass of the rubber component and is a value obtained by calculating, for each rubber component, a value obtained by multiplying a styrene content, in % by mass, by a mass fraction in the rubber component and summing up these values. Specifically, it is calculated by $\Sigma$ (styrene content (% by mass) of each styrene unit-containing rubber $\times$ content (% by mass) of each styrene unit-containing rubber in rubber component / 100). For example, in a case where a rubber component consists of 30% by mass of a first SBR (styrene content: 25% by mass), 60% by mass of a second SBR (styrene content: 27.5% by mass), and 10% by mass of a BR, a total styrene amount (S) in 100% by mass of the rubber component is 24.0% by mass (= $25\times30/100+27.5\times60/100+0\times10/100$).

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation). For example, Mw is applied to SBR, BR, and the like.

A "nitrogen adsorption specific surface area ($N_2SA$) of carbon black" is measured according to JIS K 6217-2:2017. A "nitrogen adsorption specific surface area ($N_2SA$) of silica" is measured by a BET method according to ASTM D3037-93.

A procedure for producing a tire according to one embodiment of the present invention will be described below in detail. However, the following descriptions are illustrative for explaining the present invention and are not intended to limit the technical scope of the present invention to this description range only.

[Tire]

A tire according to one embodiment of the present invention is described below with reference to the drawings. Besides, the embodiment described below is merely one example, and the tire of the present invention is not limited to the embodiment described below.

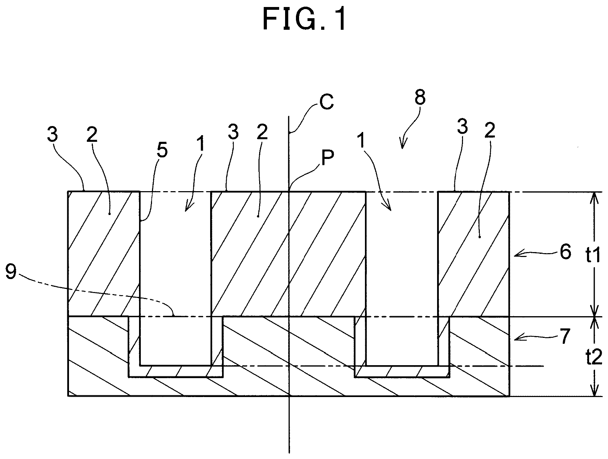

FIG. 1 is a view showing a cross section of a tread part of a tire passing through a tire rotation axis. In FIG, 1, a vertical direction is a tire radial direction, a horizontal direction is a tire width direction, and a direction perpendicular to a paper surface is a tire circumferential direction.

As shown in the drawing, a tread part 8 of a tire according to the present embodiment comprises a first layer 6 and a second layer 7, an outer surface of the first layer 6 constituting a tread surface 3, and the second layer 7 being adjacent to an inner side of the first layer 6 in a tire radial direction. The first layer 6 typically corresponds to a cap tread. Since a typical shape of the second layer 7 has not been determined, the second layer 7 may be a cap tread or a base tread. Moreover, one or more rubber layers may be further provided between the second layer 7 and a belt layer as long as the object of the present invention can be achieved. In a case where the tread part 8 comprises three or more layers, the cap tread or an inner-side layer (base tread) may be composed of two or more layers. For example, in a case where the cap tread is composed of two layers, among these cap treads, a rubber layer present on the inner side in a tire radial direction corresponds to the second layer of the present invention, and in a case where the base tread is composed of two layers, among these base treads, a rubber layer present on the outer side in the tire radial direction corresponds to the second layer of the present invention.

Although, in FIG. 1, a deepest part of a groove bottom of a circumferential groove 1 having the deepest groove depth among a plurality of circumferential grooves 1 is formed to be located on the inner side in the tire radial direction with respect to an outermost part of the second layer 7 in a land part 2 adjacent to that circumferential groove 1, the present invention is not limited to such an aspect, the deepest part of the groove bottom of the circumferential groove 1 may stay within the first layer 6 in the land part 2 adjacent to that circumferential groove 1.

Although, in FIG. 1, a groove width of each of the circumferential grooves 1 is constant from the outer side toward the inner side in the tire radial direction, the present invention is not limited to such an aspect, and the groove width may be changed from the outer side toward the inner side in the tire radial direction. Moreover, although a groove wall 5 of each of the circumferential grooves extends linearly from the outer side toward the inner side in the tire radial direction, the present invention is not limited to such an aspect, and for example, the groove wall 5 may extend in a curved shape or a stepped shape.

In the present embodiment, the total thickness of the tread part, which is a sum of a thickness t1 of the first layer 6 and a thickness t2 of the second layer 7 (t1+t2) in FIG. 1, is preferably 6.0 mm or more, more preferably 7.0 mm or more, further preferably 8.0 mm or more, further preferably 9.0 mm or more, particularly preferably 9.5 mm or more, from the viewpoints of ride comfort and durability. Moreover, the total thickness of the tread part is preferably 15.0 mm or less, more preferably 13.0 mm or less, further preferably 11.0 mm or less, from the viewpoint of effects of the present invention.

In the present embodiment, the thickness t1 of the first layer 6 is preferably 4.0 mm or more, more preferably 5.0 mm or more, further preferably 6.0 mm or more, from the viewpoint of ride comfort during high-speed running. Moreover, the thickness t1 of the first layer 6 is preferably 12.0 mm or less, more preferably 10.0 mm or less, further preferably 9.0 mm or less, particularly preferably 8.0 mm or less.

In the present embodiment, the thickness t2 of the second layer 7 is preferably 0.5 mm or more, more preferably 0.7 mm or more, further preferably 1.0 mm or more, from the viewpoint of making it easy to absorb vibration inside the tread to improve ride comfort. Moreover, the thickness t2 of the second layer 7 is preferably 6.0 mm or less, more preferably 4.0 mm or less, further preferably 3.0 mm or less, particularly preferably 2.5 mm or less, from the viewpoint of suppressing heat generation during running.

A ratio of t2 to the sum of the thickness t1 of the first layer 6 and the thickness t2 of the second layer 7 (t2/(t1+t2)) is preferably 0.10 or more, more preferably 0.20 or more, further preferably 0.30 or more, particularly preferably 0.35 or more, from the viewpoint of increasing a ratio of the thickness of the second layer in the tread part to make it easy to absorb shock by the second layer. Moreover, when the thickness of the second layer is too thick, it becomes easy to generate heat during running, a temperature of the rubber becomes high, and a tan $\delta$ of the entire tread part is reduced, so that is considered that it becomes less likely to absorb shock. Therefore, t2/(t1+t2) is preferably 0.50 mm or less, more preferably 0.45 mm or less, further preferably 0.40 mm or less.

A 70°C tan $\delta$ of the first layer 6 (70°C tan $\delta$1) is preferably 0.20 or less, more preferably 0.15 or less, further preferably 0.12 or less, from the viewpoint of suppressing an excessive rise in temperature of the first layer. Moreover, a lower limit of the 70°C tan $\delta$ of the first layer 6 is, but not particularly limited to, preferably 0.04 or more, more preferably 0.06 or more, further preferably 0.08 or more.

A 70°C tan $\delta$ of the second layer 7 (70°C tan $\delta$2) is preferably 0.02 or more, more preferably 0.03 or more, further preferably 0.04 or more, from the viewpoint of making it easy to absorb vibration transmitted from the first layer. On the other hand, it is preferably 0.20 or less, more preferably 0.15 or less, further preferably 0.10 or less, from the viewpoint of suppressing excessive heat generation inside the tread. Besides, the 70°C tan $\delta$ of the second layer 7 (70°C tan $\delta$2) is preferably less than the 70°C tan $\delta$ of the first layer 6 (70°C tan $\delta$1).

A complex elastic modulus, in MPa, at 70°C of the first layer 6 (70°CE*1) is preferably 5.0 MPa or more, more preferably 6.0 MPa or more, further preferably 6.5 MPa or more. When the 70°CE* of the first layer is within the above-described ranges, moderate rigidity can be kept, and it is considered that excess heat generation by the tread part can be suppressed even during high-speed running. Moreover, an upper limit of the 70°CE* of the first layer 6 is, but not particularly limited to, preferably 10 MPa or less, more preferably 9 MPa or less, further preferably 8 MPa or less.

A complex elastic modulus at 70°C of the second layer 7 (70°CE*2) is preferably less than the complex elastic modulus at 70°C of the first layer 6 (70°CE*1). That is, a ratio of 70°CE*2 of the second layer 7 to 70°CE*1 of the first layer 6 (70°CE*2/70°CE*1) is preferably less than 1.00. Specifically, 70°CE*2 is preferably 2.0 MPa or more, more preferably 3.0 MPa or more, further preferably 4.0 MPa or more. Moreover, 70°CE* of the second layer 2 is preferably 10 MPa or less, more preferably 9 MPa or less, further preferably 8 MPa or less.

70°CE*2/70°CE*1 is more preferably 0.80 or less, further preferably 0.70 or less. Moreover, a lower limit value of 70°CE*2/70°CE*1 is preferably 0.40 or more, more preferably 0.50 or more, further preferably 0.55 or more.

A ratio (70°CE*1/70°C tan $\delta$1) of the complex elastic modulus, in MPa, at 70°C of the first layer 6 (70°CE*1) to the tan $\delta$ at 70°C of the first layer 6 (70°C tan $\delta$1) is preferably 55 or more, more preferably 60 or more, further preferably 65 or more, particularly preferably 70 or more. Moreover, 70°CE*1/70°C tan $\delta$1 is preferably 100 or less, more preferably 90 or less, further preferably 80 or less.

The 70°C tan $\delta$ and 70°CE* can be appropriately adjusted depending on types or compounding amounts of a rubber component, a filler, a softening agent, a vulcanizing agent, a vulcanization accelerator, and the like which are described below. For example, a value of 70°C tan $\delta$ tends to be increased by increasing a total styrene amount in a rubber component, increasing a compounding amount of a filler, decreasing an amount of a vulcanizing agent or a vulcanization accelerator, using a resin having a high glass transition temperature or the like, as a softening agent, and the like. Moreover, for example, a value of 70°CE* tends to be increased by increasing a total styrene amount in a rubber component, increasing a compounding amount of a filler, increasing an amount of a vulcanizing agent or a vulcanization accelerator, using a resin having a high glass transition temperature or the like, as a softening agent, decreasing a compounding amount of a softening agent, and the like. Moreover, values of 70°C tan $\delta$ and 70°CE* tend to be decreased when a compounding amount of a recovered carbon black is decreased.

A Shore hardness Hs of a rubber composition constituting the first layer 6 is preferably 55.0 or more, more preferably 60.0 or more, further preferably 62.0 or more, particularly preferably 63.5 or more. Moreover, the rubber hardness is preferably 80.0 or less, more preferably 70.0 or less, further preferably 65.0 or less, from the viewpoint of ride comfort.

A Shore hardness, in Hs, of a rubber composition constituting the second layer 7 is preferably 40.0 or more, more preferably 45.0 or more, further preferably 50.0 or more. Moreover, the rubber hardness is preferably 75.0 or less, more preferably 65.0 or less, further preferably 60.0 or less, from the viewpoint of ride comfort.

Besides, the Shore hardness of each of the rubber layers can be appropriately adjusted depending on types or compounding amounts of a rubber component, a filler, a softening agent, and the like. For example, the Shore hardness can be increased by increasing a total styrene amount in a rubber component, increasing a compounding amount of a filler, increasing an amount of a vulcanizing agent or a vulcanization accelerator, using a resin having a high glass transition temperature or the like, as a softening agent, decreasing a compounding amount of a softening agent, and the like. Conversely, the Shore hardness can be decreased by decreasing a total styrene amount in a rubber component, decreasing a compounding amount of a filler, decreasing an amount of a vulcanizing agent or a vulcanization accelerator, using a plasticizing agent having a low glass transition temperature, as a softening agent, increasing a compounding amount of a softening agent, and the like.

A 100% modulus of the rubber composition constituting the first layer 6 is preferably 1.5 MPa or more, more preferably 2.0 MPa or more, further preferably 2.5 MPa or more. Moreover, the 100% modulus is preferably 5.5 MPa or less, more preferably 5.0 MPa or less, further preferably 4.5 MPa or less, particularly preferably 4.0 MPa or less.

The 100% modulus of the rubber composition constituting the first layer 6 is preferably greater than a 100% modulus of a rubber composition constituting the second layer 7. When rigidity of the second layer is lower than that of the first layer, it is considered that it becomes easy for the first layer to deform during running. The 100% modulus of the rubber composition constituting the second layer 7 is preferably 1.5 MPa or more, more preferably 2.0 MPa or more, further preferably 2.5 MPa or more. Moreover, the 100% modulus is preferably 5.5 MPa or less, more preferably 5.0 MPa or less, further preferably 4.5 MPa or less, particularly preferably 4.0 MPa or less.

Besides, 100% modulus can be appropriately adjusted depending on types or compounding amounts of a filler, a plasticizing agent, a vulcanizing agent, a vulcanization accelerator, and the like. For example, the 100% modulus can be increased by increasing a total styrene amount in a rubber component of a rubber composition, increasing a compounding amount of a filler, increasing an amount of a vulcanizing agent or a vulcanization accelerator, using a resin having a high glass transition temperature or the like, as a softening agent, decreasing a compounding amount of a softening agent, and the like.

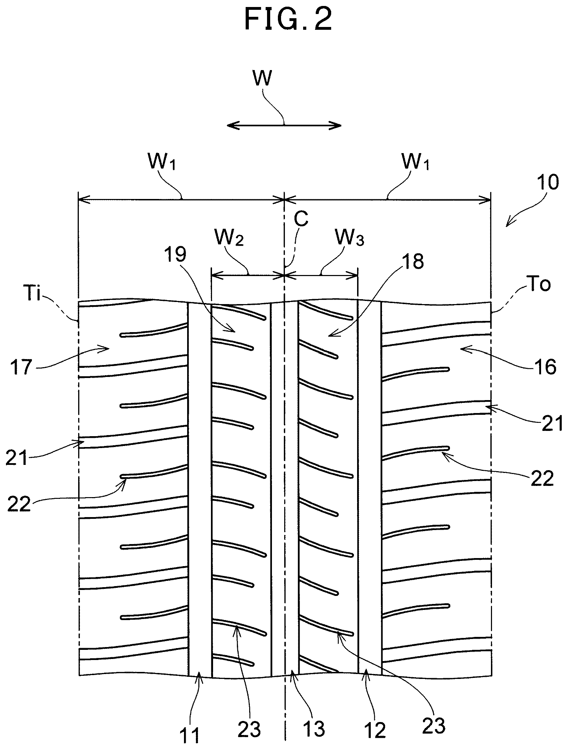

FIG. 2 is a schematic view of a ground-contacting surface of a tire when a tread part is pressed against a flat surface. The tread part according to the present embodiment preferably comprises a pair of shoulder land parts partitioned off by two or more circumferential grooves extending continuously in a tire circumferential direction, an outermost circumferential groove that is located on the outermost side in a tire width direction among the two or more circumferential grooves, and ground-contacting ends, and a center land part located between the pair of shoulder land parts. Although, in FIG.2, a tread pattern in which a mounting direction in mounting a tire to a vehicle is specified is formed on the tread part, the present invention is not limited to such an aspect, and the mounting direction in mounting a tire to a vehicle may not be specified.

In FIG. 2, the tread part comprises a plurality of circumferential grooves 11, 12, and 13 that extend continuously in the tire circumferential direction. In FIG. 2, three circumferential grooves 11, 12, and 13 are provided. However, the number of circumferential grooves is not particularly limited and may be, for example, 2 to 5. Moreover, although the circumferential grooves 11, 12, and 13 linearly extends along the circumferential direction, these circumferential grooves are not limited to such an aspect and may extend along the circumferential direction, for example, in a wavy, sinusoidal, or zigzag shape, etc.

"Shoulder land parts" in the present specification refer to a pair of land parts formed between a circumferential groove located on the outermost side in a tire width direction W from the tire equator C and a ground-contacting end. In FIG. 2, an outer-side shoulder land part 16 is provided which is formed between the circumferential groove 12 located on the outermost side when the tire is mounted to a vehicle and an outer-side ground-contacting end To, and an inner-side shoulder land part 17 is provided which is formed between a circumferential groove 11 located on the innermost side when the tire is mounted to the vehicle and an inner-side ground-contacting end Ti.

A "center land part" in the present specification refers to all land parts located between the pair of the shoulder land parts. In FIG. 2, an outer-side center land part 18 is provided which is formed between the circumferential groove 13 provided along the tire equator C and the circumferential groove 12 located on the outermost side when the tire is mounted to a vehicle, and an inner-side center land part 19 is provided which is formed between the circumferential groove 13 provided along the tire equator C and the circumferential groove 11 located on the innermost side when the tire is mounted to the vehicle. However, the number of center land parts is not particularly limited and may be, for example, 1 to 5.

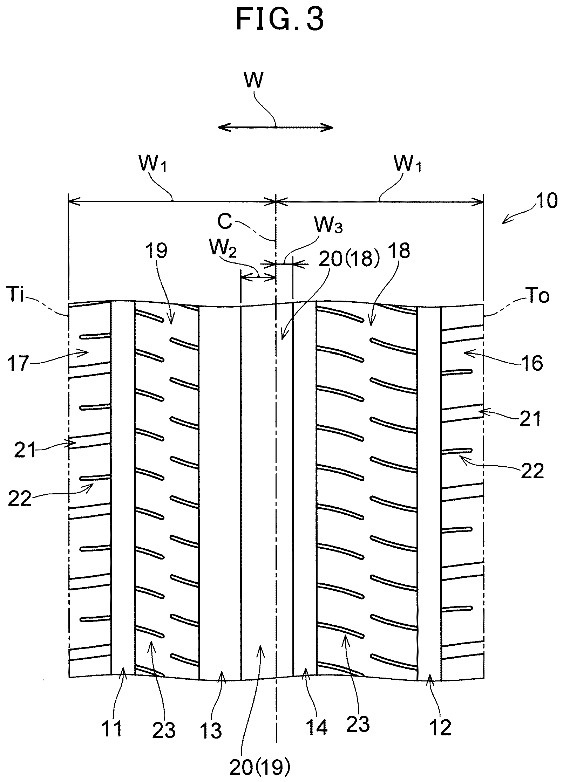

FIG. 3 is a schematic view of a ground-contacting surface of a tire that is another embodiment. In FIG. 3, a tread surface 10 comprises four circumferential grooves 11, 12, 13, and 14 that extend continuously in the circumferential direction, and no circumferential groove is present on the tire equator C. In FIG. 3, a distance $W_2$ from the tire equator C to a groove edge of the circumferential groove 13 nearest in a direction of an inner side of a vehicle is longer than a distance $W_3$ from the tire equator C to a groove edge of the circumferential groove 14 nearest in a direction of an outer side of the vehicle. Furthermore, a groove width of the circumferential groove 13 is wider than groove widths of the other circumferential grooves 11, 12, and 14. That is, when, in mounting the tire to the vehicle, a center land part located on an inner side of the vehicle from the tire equator is referred to as an inner-side center land part 19, and a center land part located on an outer side of the vehicle from the tire equator is referred to as an outer-side center land part 18, an area of the inner-side center land part is different from an area of the outer-side center land part. In FIG. 3, no circumferential groove is present on the tire equator C. Accordingly, for a center land part 20 present on the tire equator, a part of the center land part 20 on the inner side of the vehicle from the tire equator C is the inner-side center land part 19, and a part of the center land part 20 on the outer side of the vehicle from the tire equator is the outer-side center land part 18. As shown in FIG. 3, a plurality of inner-side center land parts and a plurality of outer-side center land parts may be provided. In a case where a plurality of inner-side center land parts and a plurality of outer-side center land parts are provided, an area of these land parts is the total of the areas of all these land parts. In FIG. 3, each of the shoulder land parts 16 and 17 is provided with a plurality of shoulder lateral grooves 21 each having a terminal end opened to the circumferential groove 1 and a plurality of shoulder sipes 22 each having one end opened to the circumferential grooves 11 and 12. Additionally, each of the outer-side center land part 18 and the inner-side center land part 19 is provided with a plurality of center sipes 23 each having one end opened to the circumferential grooves 11, 12, 13, and 14.

[Rubber composition]

All the rubber compositions constituting the respective layers of the tread part according to the present embodiment can be produced using raw materials described below depending on required 100% modulus, Shore hardness, 70°C tan $\delta$, 70°CE*, and the like, which will be described below in detail. Besides, unless otherwise noted, types and compounding amounts of various compounding agents illustrated are common to the rubber compositions constituting the first layer and the second layer of the tread part.

<Rubber component>

Each rubber composition according to the present embodiment preferably comprises, as a rubber component, at least one selected from the group consisting of an isoprene-based rubber, a styrene-butadiene rubber (SBR), and a butadiene rubber (BR). The rubber composition constituting the first layer preferably comprises a SBR as a rubber component, more preferably comprises a SBR and a BR, and further preferably comprises a SBR, a BR, and an isoprene-based rubber. On the other hand, the rubber composition constituting the second layer preferably comprises an isoprene-based rubber as a rubber component, more preferably comprises an isoprene-based rubber and a BR, and may be a rubber component consisting of an isoprene-based rubber and a BR. Moreover, extended rubbers previously extended with a plasticizing agent component may be used as these rubber components. Moreover, these rubber components may be modified with a functional group that can interact with a filler component such as silica, carbon black, and the like, and hydrogeneration treatment may be performed on a part of an unsaturated bond to form a saturated bond, from the viewpoints of optimization of a cross-linking form and suppression of deterioration.

(SBR)

The SBR is not particularly limited, examples of which include a non-modified solution-polymerized SBR (S-SBR), a non-modified emulsion-polymerized SBR (E-SBR), modified SBRs thereof (a modified S-SBR, a modified E-SBR), and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated ones of these SBRs (hydrogenated SBRs) and the like can also be used. These SBRs may be used alone, or two or more thereof may be used in combination.

The SBRs listed above may be used alone, or two or more thereof may be used in combination. As the SBRs listed above, for example, those commercially available from Sumitomo Chemical Co., JSR Corporation, Ltd., Asahi Kasei Corporation, Zeon Corporation, ZS Elastomer Co., Ltd., etc. can be used.

A styrene content of the SBR is preferably 40% by mass or less, more preferably 35% by mass or less, further preferably 30% by mass or less, particularly preferably 28% by mass or less, although it can be appropriately selected, for example, such that a total styrene amount in the rubber component satisfies a range described below . Moreover, the styrene content of the SBR is preferably 5% by mass or more, more preferably 7% by mass or more, further preferably 10% by mass or more. Besides, the styrene content of the SBR is measured by the above-described measuring method.

A weight-average molecular weight (Mw) of the SBR is preferably 100,000 or more, more preferably 200,000 or more, further preferably 300,000 or more, from the viewpoint of the effects of the present invention. Moreover, the weight-average molecular weight is preferably 2,000,000 or less, more preferably 1,800,000 or less, further preferably 1,500,000 or less, from the viewpoint of cross-linking uniformity. Besides, the weight-average molecular weight of the SBR is measured by the above-described measuring method.

A content of the SBR in the rubber component of the rubber composition constituting the first layer is preferably 30% by mass or more, more preferably 40% by mass or more, further preferably 50% by mass or more, particularly preferably 55% by mass or more, although it can be appropriately selected such that a total styrene amount S1 in the rubber component satisfies a range described below. On the other hand, the content of the SBR in the rubber component is preferably 95% by mass or less, more preferably 90% by mass or less, further preferably 85% by mass or less. Besides, a content of the SBR in the rubber components constituting the second layer is not particularly limited.

(Isoprene-based rubber)

As an isoprene-based rubber, for example, those common in the tire industry can be used, such as an isoprene rubber (IR), a natural rubber, and the like. Examples of the natural rubber include not only a non-modified natural rubber (NR) but also a modified natural rubber such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content I of the isoprene-based rubber in the rubber component of the rubber composition constituting the first layer is preferably 50% by mass or less, more preferably 40% by mass or less, further preferably 30% by mass or less, particularly preferably 25% by mass or less, from the viewpoint of the effects of the present invention. Moreover, a lower limit value of the content is, but not particularly limited to, preferably 5% by mass or more, more preferably 10% by mass or more, further preferably 15% by mass or more.

A content of the isoprene-based rubber in the rubber component of the rubber composition constituting the second layer is preferably 30% by mass or more, more preferably 40% by mass or more, further preferably 50% by mass or more, particularly preferably 60% by mass or more, from the viewpoint of the effects of the present invention. Moreover, a lower limit value of the content is, but not particularly limited to, preferably 95% by mass or less, more preferably 90% by mass or less, further preferably 85% by mass or less, particularly preferably 80% by mass or less.

(BR)

The BR is not particularly limited, and those common in the tire industry can be used, such as, for example, a BR having a cis content less than 50% by mass (a low cis BR), a BR having a cis content of 90% by mass or more (a high cis BR), a rare-earth-based butadiene rubber synthesized using a rare-earth element-based catalyst (a rare-earth-based BR), a BR containing a syndiotactic polybutadiene crystal (a SPB-containing BR), a modified BR (a high cis modified BR, a low cis modified BR), and the like. These BRs may be used alone, or two or more thereof may be used in combination.

As the high cis BR, for example, those commercially available form Zeon Corporation, Ube Industries, Ltd., JSR Corporation, etc. can be used. When the rubber composition comprises a high cis BR, a low temperature property and abrasion resistance can be improved. The cis content is preferably 95 mol% or more, more preferably 96 mol% or more, further preferably 97 mol% or more. Besides, the cis content of the BR is measured by the above-described measuring method.

As the modified BR, a modified butadiene rubber (modified BR) is appropriately used whose terminal and/or main chain are modified with a functional group including at least one element selected from the group consisting of silicon, nitrogen, and oxygen.

Examples of other modified BRs include those obtained by adding a tin compound after polymerizing 1,3-butadiene by a lithium initiator, the terminal of the modified BR molecule being further bonded by tin-carbon bond (tin-modified BRs), and the like. Moreover, the modified BR may be either non-hydrogenated or hydrogenated.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoint of cross-linking uniformity. Besides, the weight-average molecular weight of the BR is measured by the above-described measuring method.

A content of the BR in the rubber component of the rubber composition constituting the first layer is preferably 5% by mass or more, more preferably 10% by mass or more, further preferably 12% by mass or more, particularly preferably 15% by mass or more. On the other hand, the content of the BR in the rubber component of the rubber composition constituting the first layer is preferably 40% by mass or less, more preferably 35% by mass or less, further preferably 30% by mass or less, particularly preferably 25% by mass or less.

A content of the BR in the rubber component of the rubber composition constituting the second layer is preferably 5% by mass or more, more preferably 10% by mass or more, further preferably 15% by mass or more, particularly preferably 20% by mass or more. On the other hand, the content of the BR in the rubber component of the rubber composition constituting the second layer is preferably 80% by mass or less, more preferably 70% by mass or less, further preferably 60% by mass or less, particularly preferably 50% by mass or less.

A total content of the BR and the SBR in the rubber component of the rubber composition constituting the first layer is preferably 60% by mass or more, more preferably 70% by mass or more, further preferably 75% by mass or more, particularly preferably 80% by mass or more. On the other hand, an upper limit value of the total content of the BR and the SBR in the rubber component of the rubber composition constituting the second layer is not particularly limited.

(Other rubber components)

As the rubber component according to the present embodiment, the rubber composition may comprise a rubber component other than the above-described isoprene-based rubber, SBR, and BR. As another rubber component, a cross-linkable rubber component commonly used in the tire industry can be used, examples of which include a diene-based rubber other than the isoprene-based rubber, the SBR, and the BR, such as a styrene-isoprene rubber (SIR), a styrene-isoprene-butadiene rubber (SIBR), a chloroprene rubber (CR), an acrylonitrile-butadiene rubber (NBR), and the like; and a non-diene-based rubber, such as a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination. The rubber component according to the present embodiment comprises preferably 80% by mass or more, more preferably 90% by mass or more, further preferably 95% by mass or more, particularly preferably 98% by mass or more of a diene-based rubber or may be a rubber component consisting of a diene-based rubber. Moreover, besides the above-described rubber components, it may or may not comprise a known thermoplastic elastomer.

A total styrene content S1 in the rubber component of the rubber composition constituting the first layer is preferably 5.0% by mass or more, more preferably 7.0% by mass or more, further preferably 8.0% by mass or more, from the viewpoint of the effects of the present invention. Moreover, the total styrene content S1 in the rubber component of the rubber composition constituting the first layer is preferably 25% by mass or less, more preferably 20% by mass or less, further preferably 15% by mass or less, from the viewpoint of the effects of the present invention. Besides, a total styrene content in the rubber component of the rubber composition constituting the second layer is not particularly limited.

A product of the thickness t1 of the first layer and S1 (t1×S1) is preferably 150 or less, more preferably 140 or less, further preferably 120 or less, particularly preferably 110 or less. Moreover, t1×S1 is preferably 10 or more, more preferably 20 or more, further preferably 50 or more, from the viewpoint of the effects of the present invention.

<Filler>

Each of the rubber compositions according to the present embodiment comprises a recovered carbon (rCB) as a filler, and the recovered carbon black (rCB) is preferably used in combination with carbon black other than rCB and/or silica.

(Recovered carbon black)

A recovered carbon black can be obtained by pulverizing a used pneumatic tire (waste tire) or a used tire tube (waste tire tube) and firing the pulverized product. These waste tire and waste tire tube each preferably comprises a diene-based rubber. For example, EP 3427975 A refers to "Rubber Chemistry and Technology", vol. 85, No. 3, pp.408-449 (2012), particularly, pages 438, 440, and 442 and describes that a recovered carbon black can be obtained by pyrolysis of an organic material at 550 to 580°C under an environment in which oxygen is eliminated or by vacuum pyrolysis at a relatively low temperature ([0027]). As described in [0004] of JP 6856781 B, such carbon black obtained by the pyrolysis process usually lacks a functional group on its surface (A Comparison of Surface Morphology and Chemistry of Pyrolytic Carbon Blacks with Commercial Carbon Blacks, Powder Technology 160 (2005) 190-193).

An ash content of the recovered carbon black of the present invention is 13% by mass or more. The recovered carbon black has much ash content and thus is characterized in that it is less likely to absorb oil. The ash content is preferably 14% by mass or more, more preferably 15% by mass or more, further preferably 16% by mass or more, particularly preferably 17% by mass or more. Besides, a definition of the ash content is as described above.

The recovered carbon black may be one that lacks a functional group on its surface or may be one treated so as to include a functional group on its surface. A process for treating the recovered carbon black so that the recovered carbon black includes a functional group on its surface can be implemented by a usual method. For example, in EP 3173251 A, carbon black obtained from a pyrolysis process is treated with potassium permanganate under an acidic condition, thereby obtaining carbon black including a hydroxyl group and/or a carboxyl group on its surface. Moreover, in JP 6856781 B, carbon black obtained from a pyrolysis process is treated with an amino acid compound including at least one thiol group or disulfide group, thereby obtaining carbon black whose surface is activated. Examples of the recovered carbon black according to the present embodiment also include carbon black treated so as to include a functional group on its surface.

As the recycled carbon black, those commercially available from Strebl Green Carbon Pte Ltd., LDC Co., Ltd.,

etc. can be used.

A content C of the recovered carbon black based on 100 parts by mass of the rubber component of the rubber composition constituting the first layer is preferably 3.0 parts by mass or more, more preferably 5.0 parts by mass or more, further preferably 7.0 parts by mass or more. Moreover, it is preferably 50 parts by mass or less, more preferably 40 parts by mass or less, further preferably 30 parts by mass or less, particularly preferably 25 parts by mass or less, from the viewpoint of reinforcing property.

In the present invention, a content B of the recovered carbon black based on 100 parts by mass of the rubber component of the rubber composition constituting the second layer is greater than the content C of the recovered carbon black based on 100 parts by mass of the rubber component of the rubber composition constituting the first layer. That is, B/C is greater than 1.0.

The content B of the recovered carbon black based on 100 parts by mass of the rubber component of the rubber composition constituting the second layer is, specifically, preferably 5.0 parts by mass or more, more preferably 7.0 parts by mass or more, further preferably 10.0 parts by mass or more, further preferably 12.0 parts by mass or more, particularly preferably 14.0 parts by mass or more,. Moreover, it is preferably 80 parts by mass or less, more preferably 70 parts by mass or less, further preferably 60 parts by mass or less, particularly preferably 50 parts by mass or less, from the viewpoint of reinforcing property.

B/C is greater than 1.0, preferably greater than 1.25, more preferably greater than 1.40, further preferably greater than 1.50. On the other hand, an upper limit value of B/C is preferably 3.00 or less, more preferably 2.50 or less, further preferably 2.20 or less.

A product ($B \times (t2/t1+t2)$) of B and the ratio of t2 to the sum of the thickness t1 of the first layer and the thickness t2 of the second layer ($t2/t1+t2$) is preferably 1.4 or more, more preferably 2.0 or more, further preferably 3.0 or more. Moreover, an upper limit value of $B \times (t2/t1+t2)$ is preferably 8.0 or less, more preferably 7.5 or less, further preferably 6.0 or less.

A ratio (I/C) of the content I, in % by mass, of an isoprene-based rubber in the rubber component of the first layer to C is preferably 1.0 or more, more preferably 1.4 or more, further preferably 2.0 or more. Moreover, an upper limit value of I/C is preferably 15.0 or less, more preferably 10.0 or less, further preferably 8.0 or less.

(Carbon black other than rCB)

Carbon black other than rCB is not particularly limited, and those common in the tire industry can be used, such as, for example, GPF, FEF, HAF, ISAF, SAF, and the like. Besides, in addition to carbon black generated by burning a general mineral oil, carbon black, for which a biomass material such as lignin and the like is used, may be used. These carbon black may be used alone, or two or more thereof may be used in combination.

A nitrogen adsorption specific surface area ($N_2SA$) of carbon black is preferably 10 $m^2/g$ or more, more preferably 30 $m^2/g$ or more, further preferably 50 $m^2/g$ or more, from the viewpoint of reinforcing property. Moreover, it is preferably 200 $m^2/g$ or less, more preferably 150 $m^2/g$ or less, further preferably 120 $m^2/g$ or less, from the viewpoints of fuel efficiency and processability. Besides, the $N_2SA$ of the carbon black is measured by the above-described measuring method.

A content of carbon black other than rCB based on 100 parts by mass of the rubber component of the rubber composition constituting the first layer may be, but not particularly limited to, 0 part by mass. It is preferably 1 part by mass or more, more preferably 3 parts by mass or more, further preferably 5 parts by mass or more, from the viewpoint of reinforcing property. Moreover, it is preferably 40 parts by mass or less, more preferably 30 parts by mass or less, further preferably 20 parts by mass or less, from the viewpoint of the effects of the present invention.

A content of carbon black other than rCB based on 100 parts by mass of the rubber component of the rubber composition constituting the second layer is preferably 20 parts by mass or more, more preferably 25 parts by mass or more, further preferably 30 parts by mass or more. Moreover, the content is preferably 100 parts by mass or less, more preferably 70 parts by mass or less, further preferably 40 parts by mass or less.

A total content of carbon black (a total of the content of rCB and the content of carbon black other than rCB) based on 100 parts by mass of the rubber component of the rubber composition constituting the first layer is preferably 2 parts by mass or more, more preferably 5 parts by mass or more, further preferably 7 parts by mass or more, from the viewpoint of reinforcing property. Moreover, the total content of carbon black is preferably 50 parts by mass or less, more preferably 30 parts by mass or less, further preferably 15 parts by mass or less, from the viewpoint of the effects of the present invention.

A total content of carbon black (a total of the content of rCB and the content of carbon black other than rCB) based on 100 parts by mass of the rubber component of the rubber composition constituting the second layer is preferably 10 parts by mass or more, more preferably 15 parts by mass or more, further preferably 20 parts by mass or more, from the viewpoint of reinforcing property. Moreover, the total content of carbon black is preferably 80 parts by mass or less, more preferably 60 parts by mass or less, further preferably 50 parts by mass or less, from the viewpoint of the effects of the present invention.

A ratio of the content of the rCB to the total content of carbon black based on 100 parts by mass of the rubber component of the rubber composition constituting the first layer (C/ the total content of carbon black) is preferably 0.40 or more, more preferably 0.45 or more, further preferably 0.50 or more. A ratio of the content of the rCB to the total content of carbon black based on 100 parts by mass of the rubber component of the rubber composition constituting the second layer (B/ the total content of carbon black) is preferably 0.12 or more, more preferably 0.20 or more, further preferably 0.33 or more.

(Silica)

Silica is not particularly limited, and those common in the tire industry can be used, such as, for example, silica prepared by a dry process (anhydrous silica), silica prepared by a wet process (hydrous silica), and the like. Among them, hydrous silica prepared by a wet process is preferable for the reason that it has many silanol groups. Besides, in addition to the above-described silica, silica made from a biomass material such as rice husks and the like may be appropriately used. These silica may be used alone, or two or more thereof may be used in combination.

A nitrogen adsorption specific surface area ($N_2SA$) of silica is preferably 120 $m^2$/g or more, more preferably 150 $m^2$/g or more, further preferably 170 $m^2$/g or more, from the viewpoints of fuel efficiency and abrasion resistance. Moreover, it is preferably 350 $m^2$/g or less, more preferably 300 $m^2$/g or less, further preferably 250 $m^2$/g or less, from the viewpoints of fuel efficiency and processability. Besides, the $N_2SA$ of silica is measured by the above-described measuring method.

A content of the silica based on 100 parts by mass of the rubber component of the rubber composition constituting the first layer is preferably 40 parts by mass or more, more preferably 45 parts by mass or more, further preferably 50 parts by mass or more, particularly preferably 15 parts by mass or more, from the viewpoint of reinforcing property. Moreover, it is preferably 100 parts by mass or less, more preferably 90 parts by mass or less, further preferably 80 parts by mass or less, from the viewpoint of processability.

A content of the silica based on 100 parts by mass of the rubber component of the rubber composition constituting the second layer may be, but not particularly limited to, 0 part by mass. It is preferably 40 parts by mass or more, more preferably 45 parts by mass or more, further preferably 50 parts by mass or more, from the viewpoint of reinforcing property. Moreover, it is preferably 100 parts by mass or less, more preferably 90 parts by mass or less, from the viewpoint of processability.

A total content of carbon black (the rCB and carbon black other than the rCB) and the silica based on 100 parts by mass of the rubber component of the rubber composition constituting the first layer is preferably 50 parts by mass or more, more preferably 60 parts by mass or more, further preferably 70 parts by mass or more. A total content of carbon black (the rCB and carbon black other than the rCB) and the silica based on 100 parts by mass of the rubber component of the rubber composition constituting the second layer is preferably 30 parts by mass or more, more preferably 40 parts by mass or more, further preferably 50 parts by mass or more. Moreover, an upper limit value of each of the total contents of carbon black and the silica of the rubber compositions constituting the first layer and the second layer is preferably 200 parts by mass or less, more preferably 150 parts by mass or less, further preferably 100 parts by mass or less, from the viewpoint of processability.

(Other fillers)

Fillers other than the recovered carbon black, carbon black, and silica are not particularly limited, and those conventionally and commonly used in the tire industry can be compounded, such as, for example, aluminum hydroxide, alumina (aluminum oxide), calcium carbonate, magnesium sulfate, talc, clay, biochar, and the like. These other fillers may be used alone, or two or more thereof may be used in combination.

(Silane coupling agent)

Silica is preferably used in combination with a silane coupling agent. The silane coupling agent is not particularly limited, and any silane coupling agent conventionally used in combination with silica in the tire industry can be used, such as, for example, mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and the like; sulfide-based silane coupling agents such as bis(3-triethoxysilylpropyl)disulfide, bis(3-triethoxysilylpropyl)tetrasulfide, and the like; thioester-based silane coupling agents such as 3-octanoylthio-1-propyltriethoxysilane, 3-hexanoylthio-1-propyltriethoxysilane, 3-octanoylthio-1-propyltrimethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycidoxy-based silane coupling agents such as $\gamma$-glycidoxypropyltriethoxysilane, $\gamma$-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. Among them, a sulfide-based silane coupling agent and/or a mercapto-based silane coupling agent are preferably compounded in the rubber composition. As the silane coupling agent, for example, those commercially available from Momentive Performance Materials, etc. can be used. These silane coupling agents may be used alone, or two or more thereof may be used in combination.

A content of the silane coupling agent based on 100 parts by mass of silica preferably 1.0 parts by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

<Other compounding agents>

Each rubber composition according to the present embodiment can appropriately comprise compounding agents conventionally and commonly used in the tire industry, such as, for example, a softening agent, wax, processing aid, stearic acid, zinc oxide, an antioxidant, a vulcanizing agent, a vulcanization accelerator, and the like, in addition to the above-described components.

(Softening agent)

Each rubber composition according to the present embodiment preferably comprises a softening agent. Examples of the softening agent include, for example, a resin component, oil, a liquid rubber, and the like. Besides, each of these softening agents also comprises an extending component in using the above-described extended rubber.

Examples of the resin component include, but not particularly limited to, hydrocarbon resins, such as a petroleum resin, a terpene-based resin, a rosin-based resin, a phenol-based resin, and the like, which are commonly used in the tire industry.

A content of the resin component when compounded based on 100 parts by mass of the rubber component is preferably 2 parts by mass or more, more preferably 3 parts by mass or more, further preferably 4 parts by mass or more. Moreover, the content of the resin component is preferably 40 parts by mass or less, more preferably 30 parts by mass or less, further preferably 25 parts by mass or less, particularly preferably 20 parts by mass or less.

Examples of the oil include, for example, paraffinic process oils, naphthenic process oils, aromatic process oils, and the like. Moreover, as an environmental measure, process oils each having a low content of a polycyclic aromatic compound (PCA) can also be used. Examples of the process oils each having a low content of a PCA include mild extraction solvates (MES), treated distillate aromatic extracts (TDAE), heavy naphthenic oil, and the like. Moreover, from the viewpoint of a life cycle assessment, one obtained by refining a waste oil after use for a rubber mixing machine or an engine or waste cooking oil used in a cooking facility may be used.

A content of the oil when compounded based on 100 parts by mass of the rubber component is preferably 1 part by mass or more, more preferably 3 parts by mass or more, further preferably 5 parts by mass or more. Moreover, the content is preferably 50 parts by mass or less, more preferably 40 parts by mass or less, further preferably 30 parts by mass or less.

The liquid rubber is not particularly limited as long as it is a polymer in a liquid state at normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. These liquid rubbers may be used alone, or two or more thereof may be used in combination.

A content of the liquid rubber when compounded based on 100 parts by mass of the rubber component is preferably 1 part by mass or more, more preferably 3 parts by mass or more, further preferably 5 parts by mass or more. Moreover, the content is preferably 30 parts by mass or less, more preferably 20 parts by mass or less, further preferably 10 parts by mass or less.

A content of the softening agent based on 100 parts by mass of the rubber component of the rubber composition constituting the first layer is preferably 5 parts by mass or more, more preferably 6 parts by mass or more, further preferably 7 parts by mass or more, particularly preferably 8 parts by mass or more. Moreover, the content is preferably 60 parts by mass or less, more preferably 50 parts by mass or less, further preferably 45 parts by mass or less, particularly preferably 40 parts by mass or less.

A content of the softening agent based on 100 parts by mass of the rubber component of the rubber composition constituting the second layer is preferably 1 part by mass or more, more preferably 2 parts by mass or more, further preferably 3 parts by mass or more. Moreover, the content is preferably 50 parts by mass or less, more preferably 40 parts by mass or less, further preferably 30 parts by mass or less, particularly preferably 20 parts by mass or less.

A content of wax when compounded based on 100 parts by mass of the rubber component is preferably 0.5 parts by mass or more, more preferably 1.0 parts by mass or more, further preferably 1.5 parts by mass or more, from the viewpoint of weather resistance of a rubber. Moreover, it is preferably 10 parts by mass or less, more preferably 5.0 parts by mass or less, from the viewpoint of prevention of whitening of a tire due to bloom.

Examples of processing aid include, for example, a fatty acid metal salt, a fatty acid amide, an amide ester, a silica surfactant, a fatty acid ester, a mixture of a fatty acid metal salt and an amide ester, a mixture of a fatty acid metal salt and a fatty acid amide, and the like. The processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably 0.5 parts by mass or more, more preferably 1.0 parts by mass or more, further preferably 1.5 parts by mass or more, from the viewpoint of exhibiting an effect of improving processability. Moreover, it is preferably 10 parts by mass or less, more preferably 8.0 parts by mass or less, from the viewpoints of abrasion resistance and breaking strength.

Examples of the antioxidant include, but not particularly limited to, for example, amine-based, quinoline-based, quinone-based, phenol-based, and imidazole-based compounds, and antioxidants such as a carbamic acid metal salt and the like, and a phenylenediamine-based antioxidant such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and the like; and a quinoline-based antioxidant such as 2,2,4-trimethyl-1,2-dihydroquinoline polymer, 6-ethoxy-2,2,4-trimethyl-1,2-dihydroquinoline, and the like are preferable. These antioxidants may be used alone, or two or more thereof may be used in combination.

A content of the antioxidant when compounded based on 100 parts by mass of the rubber component is preferably 0.5 parts by mass or more, more preferably 1.0 parts by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as the vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of prevention of deterioration. Besides, a content of the vulcanizing agent when an oil-containing sulfur is used as the vulcanizing agent is defined as a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, xanthate-based vulcanization accelerators, and the like. These vulcanization accelerators may be used alone, or two or more thereof may be used in combination. Among them, one or more vulcanization accelerators selected from the group consisting of sulfenamide-based, guanidine-based, and thiazole-based vulcanization accelerators are preferable, and the sulfenamide-based vulcanization accelerator is more preferable.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, N-cyclohexyl-2-benzothiazolyl sulfenamide (CBS) is preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionyl guanidine, and the like. Among them, 1,3-diphenylguanidine (DPG) is preferable.

Examples of the thiazole-based vulcanization accelerator include, for example, 2-mercaptobenzothiazole, cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component (a total amount of all of a plurality of vulcanization accelerators when used in combination) is preferably 1.0 parts by mass or more, more preferably 2.0 parts by mass or more, further preferably 2.5 parts by mass or more. Moreover, the content is preferably 8.0 parts by mass or less, more preferably 7.0 parts by mass or less, further preferably 6.0 parts by mass or less. When the content of the vulcanization accelerator is within the above-described ranges, breaking strength and elongation tend to be secured.

The rubber composition according to the present embodiment can be produced by a known method. For example, it can be produced by kneading the respective above-described components with a rubber kneading machine such as an open roll, a sealed type kneader (a Banbury mixer, a kneader, and the like), and the like.

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of vulcanization conditions include, but not particularly limited to, for example, a method of vulcanizing at 150°C to 200°C for 10 to 30 minutes.

The tire comprising the tread including the first layer 6 and the second layer 7 can be produced using the respective corresponding rubber compositions by a usual method. That is, the tire can be produced by extruding unvulcanized rubber compositions, which are obtained by the above-described method and correspond to the respective rubber layers, into the shapes of the respective rubber layers with an extruder equipped with a mouthpiece having a predetermined shape, attaching them together with other tire members on a tire forming machine, and molding them by a usual method to form an unvulcanized tire, followed by heating and pressurizing this unvulcanized tire in a vulcanizing machine. Examples of vulcanization conditions include, but not particularly limited to, for example, a method of vulcanizing at 150°C to 200°C for 10 to 30 minutes.

<Application>

The tire according to the present embodiment can be appropriately used as a tire for a passenger car, a tire for a truck/bus, a motorcycle tire, or a racing tire, and among them, the tire is preferably used as a tire for a passenger car. Besides, the tire for a passenger car refers to a tire that is presupposed to be mounted to a vehicle running with four wheels and that has a maximum load capacity of 1000 kg or less. Moreover, the tire according to the present embodiment can be used as an all-season tire, a summer tire, or a winter tire such as a studless tire.

EXAMPLES

The present invention will be described based on Examples, though the present invention is not limited to only these Examples.

For a tire comprising a tread part composed of a rubber composition obtained in accordance with Table 1 using various chemicals described below, results calculated based on evaluation methods described below are shown in Tables 1 and 2.

SBR 1: HPR355 manufactured by JSR Corporation (S-SBR, styrene content: 28% by mass, vinyl content: 56 mol%, Mw: 400,000)
SBR 2: HPR840 manufactured by JSR Corporation (S-SBR, styrene content: 10% by mass, vinyl content: 42 mol%, non-oil extended)
NR: TSR 20
BR: BR730 manufactured by JSR Corporation (BR synthesized using a Nd-based catalyst, cis-1,4 bond content: 96.6 mol%, Mw: 580,000)
Carbon black 1: SHOW BLACK N351H manufactured by Cabot Japan K.K. ($N_2SA$: 69 $m^2/g$)
Carbon black 2: SHOW BLACK N220 manufactured by Cabot Japan K.K. ($N_2SA$: 111 $m^2/g$)
Recovered carbon black: carbon black resulting from pulverization and firing of a waste tire (ach content: 17% by mass)
Silica: Ultrasil VN3 manufactured by Evonik Degussa GmbH ($N_2SA$: 175 $m^2/g$)

Silane coupling agent: Si69 manufactured by Evonik Degussa GmbH (bis(3-triethoxysilylpropyl)tetrasulfide)

Oil: PROCESS X-140 manufactured by ENEOS Corporation

Wax: Hi-Mic-1080 manufactured by Nippon Seiro Co., Ltd. (microcrystalline wax)

Resin component 1: SYLVATRAXX 4401 manufactured by Kraton Corporation (softening point: 85°C, glass transition temperature: 39°C)

Resin component 2: PETROTACK 90 manufactured by Tosoh Corporation

Antioxidant: Nocrac 6C manufactured by Ouchi Shinko Chemical Industry Co., Ltd. (N-phenyl-N'-(1,3-dimethylbutyl)-p-phenylenediamine (6PPD))

Stearic acid: Bead stearic acid "CAMELLIA" manufactured by NOF CORPORATION

Zinc oxide: Zinc oxide No. 1 manufactured by Mitsui Mining & Smelting Co., Ltd.

Sulfur: HK-200-5 manufactured by Hosoi Chemical Industry Co., Ltd. (5% oil-containing powdered sulfur)

Vulcanization accelerator 1: Noceler CZ manufactured by Ouchi Shinko Chemical Industry Co., Ltd. (N-cyclohexyl-2-benzothiazolylsulfenamide (CBS))

Vulcanization accelerator 2: Noceler D manufactured by Ouchi Shinko Chemical Industry Co., Ltd. (1,3-diphenylguanidine (DPG))

(Examples and Comparative examples)

According to the compounding formulations shown in Table 1, using a 1.7 L closed Banbury mixer, chemicals other than sulfur and a vulcanization accelerator are kneaded for 1 to 10 minutes until the temperature reaches a discharge temperature of 150 to 160°C, to obtain a kneaded product. Next, using a twin-screw open roll, sulfur and the vulcanization accelerator are added to the obtained kneaded product, and the mixture is kneaded for 4 minutes until the temperature reaches 105°C, to obtain unvulcanized rubber compositions. The obtained unvulcanized rubber compositions are molded into shapes of a first layer and /or a second layer of a tread and attached together with other tire members to produce an unvulcanized tire, and the unvulcanized tire is vulcanized at 170°C, thereby obtaining test tires listed in Table 2. Besides, a total thickness of the tread part is set to 10.0 mm.

< Measurement of 70°CE* and 70°C tan δ>

For each vulcanized rubber test piece collected to have a length of 20 mm, a width of 4 mm, and a thickness of 1 mm by being cut out from the inside of a first layer or a second layer of a tread part of each test tire such that a tire circumferential direction becomes a long side and a tire radial direction becomes a thickness direction, a complex elastic module E* and a loss tangent tan δ are measured using a dynamic viscoelasticity measuring device (EPLEXOR series manufactured by gabo Systemtechnik GmbH) under a condition of a temperature at 70°C, a frequency of 10 Hz, an initial strain of 5%, a dynamic strain of ±1%, and an extension mode according to JIS K 6394: 2007.

< Measurement of Shore hardness>

A sample for measurement of hardness is prepared from inside of a first layer or a second layer of a tread part of each test tire such that the tire radial direction becomes a thickness direction, and a rubber hardness is measured at 23°C according to JIS K 6253 while pressing a type-A durometer against the sample from the ground-contacting-surface side.

<Tensile test>

A No. 7 dumbbell-shaped test piece with a thickness of 1 mm is cut out from inside of a first layer or a second layer of a tread part of each test tire so that a tire circumferential direction became a tensile direction, and a tensile test is performed according to JIS K 6251: 2017 "Rubber, vulcanized or thermoplastics-Determination of tensile stress-strain properties" under a condition of a tensile speed of 3.3 mm/sec in an atmosphere at 23°C to measure modulus at 100% elongation, in MPa. Besides, a direction of a thickness of the sample is set to be a tire radial direction.

<Ride comfort during high-speed running>

Each test tire is filled with air at 250 kPa and mounded on an automobile with a displacement of 2000 cc. This automobile is made run at 100 km/h on a test course with an asphalt road surface, and test drivers perform sensory evaluations on ride comfort. The evaluations are performed using scores that are integer values of 1 to 5, and based on evaluation criteria that the higher the score is, the more excellent the ride comfort is, a total score by 20 test drivers is calculated. A total score of Comparative example 5 is converted into a reference value (100), and an evaluation result for each test tire is indicated as an index in proportion to the total score.

Table 1

| | Rubber compounding in tread part | | | | | | | | | |
|---|---|---|---|---|---|---|---|---|---|---|
| | 1 | 2 | 3 | 4 | 5 | 6 | 7 | 8 | 9 | 10 |
| Compounding amount (part by mass) | | | | | | | | | | |
| SBR 1 | - | - | - | - | 60 | 60 | 60 | - | 60 | 60 |
| SBR 2 | - | - | - | - | - | - | - | 60 | - | - |
| NR | 70 | 70 | 70 | 70 | 20 | 20 | 20 | 20 | 20 | 20 |
| BR | 30 | 30 | 30 | 30 | 20 | 20 | 20 | 20 | 20 | 20 |
| Carbon black 1 | 40.0 | 36.0 | 32.0 | 28.0 | - | - | - | - | - | - |
| Carbon black 2 | - | - | - | - | 10.0 | 5.0 | - | 5.0 | 5.0 | 5.0 |
| rCB | - | 5.0 | 10.0 | 15.0 | - | 7.0 | 14.0 | 7.0 | 7.0 | 7.0 |
| Silica | - | - | - | - | 60.0 | 60.0 | 55.0 | 60.0 | 60.0 | 60.0 |
| Silane coupling agent | - | - | - | - | 5.0 | 5.0 | 5.0 | 5.0 | 5.0 | 5.0 |
| Oil | 8.0 | 8.0 | 8.0 | 8.0 | 8.0 | 8.0 | 8.0 | 8.0 | 7.5 | 7.6 |
| Resin component 1 | - | - | - | - | 5.0 | 5.0 | 5.0 | 5.0 | - | 2.5 |
| Resin component 2 | - | - | - | - | - | - | - | - | 6.0 | 2.8 |
| Wax | 1.0 | 1.0 | 1.0 | 1.0 | 1.5 | 1.5 | 1.5 | 1.5 | 1.5 | 1.5 |
| Antioxidant | 2.5 | 2.5 | 2.5 | 2.5 | 2.5 | 2.5 | 2.5 | 2.5 | 2.5 | 2.5 |
| Stearic acid | 2.5 | 2.5 | 2.5 | 2.5 | 2.5 | 2.5 | 2.5 | 2.5 | 2.5 | 2.5 |
| Zinc oxide | 3.0 | 3.0 | 3.0 | 3.0 | 2.0 | 2.0 | 2.0 | 2.0 | 2.0 | 2.0 |
| Sulfur | 2.4 | 2.4 | 2.4 | 2.4 | 1.5 | 1.5 | 1.5 | 1.5 | 1.5 | 1.5 |
| Vulcanization accelerator 1 | 2.0 | 2.0 | 2.0 | 2.0 | 2.5 | 2.5 | 2.5 | 2.5 | 2.5 | 2.5 |
| Vulcanization accelerator 2 | - | - | - | - | 2.0 | 2.0 | 2.0 | 2.0 | 2.0 | 2.0 |
| Total styrene content in rubber component (% by mass) | 0 | 0 | 0 | 0 | 16.8 | 16.8 | 16.8 | 16.5 | 16.8 | 16.8 |
| NR/rCB | - | 14.0 | 7.0 | 4.67 | - | 2.86 | 1.43 | 2.86 | 2.86 | 2.86 |
| 70°CE* (MPa) | 4.5 | 4.4 | 4.3 | 4.2 | 7.6 | 7.0 | 6.8 | 6.5 | 7.0 | 7.0 |
| 70°C tan $\delta$ (°C) | 0.06 | 0.06 | 0.06 | 0.05 | 0.13 | 0.13 | 0.12 | 0.12 | 0.13 | 0.13 |
| Shore hardness | 56.1 | 56.1 | 56.0 | 55.7 | 64.3 | 63.8 | 63.9 | 62.9 | 63.5 | 63.1 |
| 100% modulus | 2.1 | 2.0 | 2.0 | 1.9 | 2.7 | 2.8 | 2.9 | 2.9 | 2.7 | 2.6 |

Table 2

| | Example | | | | | | | | | |
|---|---|---|---|---|---|---|---|---|---|---|
| | 1 | 2 | 3 | 4 | 5 | 6 | 7 | 8 | 9 | 10 |
| Compounding for first layer | 6 | 6 | 6 | 6 | 6 | 6 | 7 | 2 | 6 | 2 |
| Compounding for second layer | 7 | 7 | 7 | 7 | 3 | 4 | 4 | 6 | 7 | 4 |
| Content of rCB (part by mass) | | | | | | | | | | |
| First layer (C) | 7.0 | 7.0 | 7.0 | 7.0 | 7.0 | 7.0 | 14.0 | 5.0 | 7.0 | 5.0 |
| Second layer (B) | 14.0 | 14.0 | 14.0 | 14.0 | 10.0 | 15.0 | 15.0 | 7.0 | 14.0 | 15.0 |
| 70°CE* (MPa) | | | | | | | | | | |
| First layer | 7.0 | 7.0 | 7.0 | 7.0 | 7.0 | 7.0 | 6.8 | 4.4 | 7.0 | 4.4 |
| Second layer | 6.8 | 6.8 | 6.8 | 6.8 | 4.3 | 4.2 | 4.2 | 7.0 | 6.8 | 4.2 |
| 70°C tan $\delta$ | | | | | | | | | | |
| First layer | 0.13 | 0.13 | 0.13 | 0.13 | 0.13 | 0.13 | 0.12 | 0.06 | 0.13 | 0.06 |
| Second layer | 0.12 | 0.12 | 0.12 | 0.12 | 0.06 | 0.05 | 0.05 | 0.13 | 0.12 | 0.05 |

(continued)

|  | Example | | | | | | | | | |
|---|---|---|---|---|---|---|---|---|---|---|
|  | 1 | 2 | 3 | 4 | 5 | 6 | 7 | 8 | 9 | 10 |
| Shore hardness (Hs) | | | | | | | | | | |
| First layer | 63.8 | 63.8 | 63.8 | 63.8 | 63.8 | 63.8 | 63.9 | 56.1 | 63.8 | 56.1 |
| Second layer | 63.9 | 63.9 | 63.9 | 63.9 | 56 | 55.7 | 55.7 | 63.8 | 63.9 | 55.7 |
| 100% modulus (MPa) | | | | | | | | | | |
| First layer | 2.8 | 2.8 | 2.8 | 2.8 | 2.8 | 2.8 | 2.9 | 2 | 2.8 | 2 |
| Second layer | 2.9 | 2.9 | 2.9 | 2.9 | 2 | 1.9 | 1.9 | 2.8 | 2.9 | 1.9 |
| B/C | 2.00 | 2.00 | 2.00 | 2.00 | 1.43 | 2.14 | 1.07 | 1.40 | 2.00 | 3.00 |
| S1 (% by mass) | 16.8 | 16.8 | 16.8 | 16.8 | 16.8 | 16.8 | 16.8 | 0 | 16.8 | 0 |
| t1 (mm) | 9.0 | 8.0 | 6.0 | 7.0 | 7.0 | 7.0 | 7.0 | 7.0 | 7.0 | 7.0 |
| t2 (mm) | 1.0 | 2.0 | 4.0 | 3.0 | 3.0 | 3.0 | 3.0 | 3.0 | 3.0 | 3.0 |
| t2/(t1 +t2) | 0.1 | 0.2 | 0.4 | 0.3 | 0.3 | 0.3 | 0.3 | 0.3 | 0.3 | 0.3 |
| B×t2/(t1+t2) | 1.4 | 2.8 | 5.6 | 4.2 | 3.0 | 4.5 | 4.5 | 2.1 | 4.2 | 4.5 |
| 70°CE*2/70°CE*1 | 0.97 | 0.97 | 0.97 | 0.97 | 0.61 | 0.60 | 0.62 | 1.59 | 0.97 | 0.95 |
| t1×S1 | 151.2 | 134.4 | 100.8 | 117.6 | 117.6 | 117.6 | 117.6 | 0 | 117.6 | 0 |
| I/C | 2.86 | 2.86 | 2.86 | 2.86 | 2.86 | 2.86 | 1.43 | 14.00 | 2.86 | 14.00 |
| 70°CE*1/70°C tan δ 1 | 53.8 | 53.8 | 53.8 | 53.8 | 53.8 | 53.8 | 56.7 | 73.3 | 53.8 | 73.3 |
| Tread pattern | FIG. 2 | FIG. 2 | FIG. 2 | FIG. 2 | FIG. 2 | FIG. 2 | FIG. 2 | FIG. 2 | FIG. 3 | Fig. 2 |
| Ride comfort during highspeed running | 102 | 104 | 106 | 108 | 112 | 118 | 114 | 116 | 112 | 120 |

|  | Example | | | | Comparative example | | | | |
|---|---|---|---|---|---|---|---|---|---|
|  | 11 | 12 | 13 | 14 | 1 | 2 | 3 | 4 | 5 |
| Compounding for first layer | 8 | 8 | 9 | 10 | 5 | 6 | 6 | 5 | 5 |
| Compounding for second layer | 7 | 7 | 7 | 7 | 1 | 1 | 2 | 3 | 3 |
| Content of rCB (part by mass) | | | | | | | | | |
| First layer (C) | 7.0 | 7.0 | 7.0 | 7.0 | 0 | 7.0 | 7.0 | 0 | 0 |
| Second layer (B) | 14.0 | 14.0 | 14.0 | 14.0 | 0 | 0 | 5.0 | 10.0 | 10.0 |
| 70°CE* (MPa) | | | | | | | | | |
| First layer | 6.5 | 6.5 | 7.0 | 7.0 | 7.6 | 7.0 | 7.0 | 7.6 | 7.6 |
| Second layer | 6.8 | 6.8 | 6.8 | 6.8 | 4.5 | 4.5 | 4.4 | 4.3 | 4.3 |
| 70°C tan δ | | | | | | | | | |
| First layer | 0.12 | 0.12 | 0.13 | 0.13 | 0.13 | 0.13 | 0.13 | 0.13 | 0.13 |
| Second layer | 0.12 | 0.12 | 0.12 | 0.12 | 0.06 | 0.06 | 0.06 | 0.06 | 0.06 |
| Shore hardness (Hs) | | | | | | | | | |
| First layer | 62.9 | 62.9 | 63.5 | 63.1 | 64.3 | 63.8 | 63.8 | 64.3 | 64.3 |
| Second layer | 63.9 | 63.9 | 63.8 | 63.8 | 56.1 | 56.1 | 56.1 | 56 | 56 |
| 100% modulus (MPa) | | | | | | | | | |
| First layer | 2.9 | 2.9 | 2.7 | 2.6 | 2.7 | 2.8 | 2.8 | 2.7 | 2.7 |

(continued)

|  | | Example | | | | Comparative example | | | | |
|---|---|---|---|---|---|---|---|---|---|---|
|  | | 11 | 12 | 13 | 14 | 1 | 2 | 3 | 4 | 5 |
| Second layer | | 2.9 | 2.9 | 2.9 | 2.9 | 2.1 | 2.1 | 2 | 2 | 2 |
| B/C | | 2.00 | 2.00 | 2.00 | 2.00 | - | - | 0.71 | - | - |
| S1 (% by mass) | | 16.5 | 16.5 | 16.8 | 16.8 | 16.8 | 16.8 | 16.8 | 16.8 | 16.8 |
| t1 (mm) | | 7.0 | 6.0 | 7.0 | 7.0 | 9.0 | 9.0 | 9.0 | 9.0 | 7.0 |
| t2 (mm) | | 3.0 | 4.0 | 3.0 | 3.0 | 1.0 | 1.0 | 1.0 | 1.0 | 3.0 |
| t2/(t1 +t2) | | 0.3 | 0.4 | 0.3 | 0.3 | 0.1 | 0.1 | 0.1 | 0.1 | 0.3 |
| B×t2/(t1+t2) | | 4.2 | 5.6 | 4.2 | 4.2 | 0 | 0 | 0.5 | 1.0 | 3.0 |
| 70°CE*2/70°CE*1 | | 1.05 | 1.05 | 0.97 | 0.97 | 0.59 | 0.64 | 0.63 | 0.57 | 0.57 |
| t1×S1 | | 115.5 | 99.0 | 117.6 | 117.6 | 151.2 | 151.2 | 151.2 | 151.2 | 117.6 |
| I/C | | 2.86 | 2.86 | 2.86 | 2.86 | - | 2.86 | 2.86 | - | - |
| 70°CE*1/70°C tan δ 1 | | 54.2 | 54.2 | 53.8 | 53.8 | 58.5 | 53.8 | 53.8 | 58.5 | 58.5 |
| Tread pattern | | FIG. 2 | FIG. 2 | FIG. 2 | FIG. 2 | FIG.2 | FIG. 2 | FIG. 2 | FIG. 2 | FIG. 2 |
| Ride comfort during highspeed running | | 106 | 104 | 108 | 110 | 88 | 90 | 92 | 96 | 100 |

REFERENCE SIGNS LIST

1 Circumferential groove
2 Land part
3 Tread surface
5 Groove wall
6 First layer
7 Second layer
8 Tread part
9 Extension line of outermost part of second layer
t1 Thickness of first layer
t2 Thickness of second layer
P Intersection point of outermost end of tread part that crosses tire equator
10 Tread surface
11, 12, 13, 14 Circumferential groove
16 Outer-side shoulder land part
17 Inner-side shoulder land part
18 Outer-side center land part
19 Inner-side center land part
20 Center land part
21 Shoulder lateral groove
22 Shoulder sipe
23 Center sipe
C Tire equator
To Outer-side ground-contacting end
Ti Inner-side ground-contacting end
W Tire width direction

**Claims**

1. A tire comprising a tread part,

   wherein the tread part comprises

   a first layer constituting a tread surface, and
   a second layer adjacent to an inner side of the first layer in a tire radial direction,

   wherein each of the first layer and the second layer is composed of a rubber composition comprising a rubber component and a recovered carbon black, and
   wherein B/C is greater than 1.0, where a content of the recovered carbon black based on 100 parts by mass of a rubber component of a rubber composition constituting the first layer is referred to as C, in parts by mass, and a content of the recovered carbon black based on 100 parts by mass of a rubber component of a rubber composition constituting the second layer is referred to as B, in parts by mass,
   wherein the term "recovered carbon black" refers to carbon black that is obtained by pulverizing a product comprising carbon black and firing the pulverized product, in which, when the product is subjected to oxidative combustion by heating in the air, using a thermal weight measurement method according to JIS K 6226-2:2003, a ratio of a mass of ash, which is a component that does not combust, is 13% by mass or more.

2. The tire of claim 1, wherein a ratio of t2 to a sum of t1 and t2 (t2/(t1 +t2)) is 0.20 or more, preferably 0.25 or more, more preferably 0.30 or more, further preferably 0.35 or more, where a thickness of the first layer is referred to as t1, in mm, and a thickness of the second layer is referred to as t2, in mm.

3. The tire of claim 1 or 2, wherein B×t2/(t1+t2) is 3.0 or more, preferably 3.5 or more, where a thickness of the first layer is referred to as t1, in mm, and a thickness of the second layer is referred to as t2, in mm.

4. The tire of any one of claims 1 to 3, wherein 70°CE*2/70°CE*1 is 0.70 or less, where a complex elastic modulus at 70°C of the rubber composition constituting the first layer is referred to as 70°CE*1, in MPa, and a complex elastic modulus at 70°C of the rubber composition constituting the second layer is referred to as 70°CE*2, in MPa, wherein the complex elastic modulus at 70°C is measured according to the method given in the description.

5. The tire of any one of claims 1 to 4, wherein a 100% modulus of the rubber composition constituting the first layer is greater than a 100% modulus of the rubber composition constituting the second layer, wherein the 100% modulus is measured according to the method given in the description.

6. The tire of any one of claims 1 to 5, wherein 70°CE*1/70°C tan $\delta$1 is 60 or more and 100 or less, where a tan $\delta$ at 70°C of the rubber composition constituting the first layer is referred to as 70°C tan $\delta$1, and a complex elastic modulus at 70°C of the rubber composition constituting the first layer is referred to as 70°CE*1,in MPa, wherein the tan $\delta$ at 70°C is measured according to the method given in the description.

7. The tire of any one of claims 1 to 6, wherein t1×S1 is 150 or less, preferably 140 or less, more preferably 120 or less, further preferably 110 or less, where a total styrene amount in the rubber component of the rubber composition constituting the first layer is referred to as S1, in % by mass.

8. The tire of any one of claims 1 to 7, wherein I/C is 1.0 or more, preferably 1.4 or more, more preferably 1.8 or more, further preferably 2.0 or more, where a content of an isoprene-based rubber in the rubber component of the rubber composition constituting the first layer is referred to as I, in % by mass.

9. The tire of any one of claims 1 to 8, wherein a Shore hardness Hs of the rubber composition constituting the first layer is greater than 60 and less than 80 and is greater than a Shore hardness Hs of the rubber composition constituting the second layer, wherein the Shore hardness Hs is measured according to the method given in the description.

10. The tire of any one of claims 1 to 9, wherein the recovered carbon black is a recovered carbon black resulting from firing of a waste tire and/or a waste tire tube.

11. The tire of claim 10, wherein the waste tire and/or the waste tire tube comprises a diene-based rubber.

12. The tire of any one of claims 1 to 11, wherein the tire is a tire for a passenger car.

13. The tire of any one of claims 1 to 12,

wherein the tread part comprises

a pair of shoulder land parts partitioned off by two or more circumferential grooves extending continuously in a tire circumferential direction, an outermost circumferential groove that is located on the outermost side in a tire width direction among the two or more circumferential grooves, and ground-contacting ends, and a center land part located between the pair of shoulder land parts, and

wherein an area of an inner-side center land part is different from an area of an outer-side center land part, where, in mounting the tire to a vehicle, a center land part located on an inner side of the vehicle from a tire equator is referred to as the inner-side center land part, and a center land part located on an outer side of the vehicle from the tire equator is referred to as the outer-side center land part.


## Patentansprüche

1. Reifen, umfassend einen Laufstreifenteil,

wobei der Laustreifenteil umfasst:

eine erste Schicht, die eine Laufstreifenoberfläche bildet, und
eine zweite Schicht, die zu einer inneren Seite der ersten Schicht in einer Reifenradialrichtung benachbart ist,

wobei jede von der ersten Schicht und der zweiten Schicht mit einer Kautschukzusammensetzung aufgebaut ist, die eine Kautschukkomponente und einen rückgewonnenen Ruß umfasst, und
wobei B/C größer als 1,0 ist, worin ein Gehalt des rückgewonnenen Rußes bezogen auf 100 Massenteile einer Kautschukkomponente einer Kautschukzusammensetzung, welche die erste Schicht bildet, als C, in Massenteilen, bezeichnet ist, und ein Gehalt des rückgewonnenen Rußes bezogen auf 100 Massenteile einer Kautschukkomponente einer Kautschukzusammensetzung, welche die zweite Schicht bildet, als B, in Massenteilen, bezeichnet ist,
wobei der Begriff "rückgewonnener Ruß" Ruß bezeichnet, der durch Pulverisieren eines Produkts, das Ruß umfasst, und Brennen des pulverisierten Produkts erhalten ist, in welchem, wenn das Produkt oxidativer Verbrennung durch Erhitzen an der Luft unterzogen wird, unter Verwendung eines thermischen Gewichtsmessungsverfahrens gemäß JIS K 6226-2:2003, ein Anteil einer Masse von Asche, welche eine Komponente ist, die nicht verbrennt, 13 Massen-% oder mehr beträgt.

2. Reifen nach Anspruch 1, wobei ein Verhältnis von t2 zu einer Summe von t1 und t2 (t2/(t1 +t2)) 0,20 oder mehr beträgt, bevorzugt 0,25 oder mehr, bevorzugter 0,30 oder mehr, weiter bevorzugt 0,35 oder mehr, worin eine Dicke der ersten Schicht als t1, in mm, bezeichnet ist, und eine Dicke der zweiten Schicht als t2, in mm, bezeichnet ist.

3. Reifen nach Anspruch 1 oder 2, wobei B×t2/(t1+t2) 3,0 oder mehr beträgt, bevorzugt 3,5 oder mehr, worin eine Dicke der ersten Schicht als t1, in mm, bezeichnet ist, und eine Dicke der zweiten Schicht als t2, in mm, bezeichnet ist.

4. Reifen nach einem der Ansprüche 1 bis 3, wobei 70°CE*2/70°CE*1 0,70 oder weniger beträgt, worin ein komplexer Elastizitätsmodul bei 70°C der Kautschukzusammensetzung, welche die erste Schicht bildet, als 70°CE*1, in MPa, bezeichnet ist, und ein komplexer Elastizitätsmodul bei 70°C der Kautschukzusammensetzung, welche die zweite Schicht bildet, als 70°CE*2, in MPa, bezeichnet ist, wobei der komplexe Elastizitätsmodul bei 70°C gemäß dem in der Beschreibung angegebenen Verfahren gemessen ist.

5. Reifen nach einem der Ansprüche 1 bis 4, wobei ein 100%-Modul der Kautschukzusammensetzung, welche die erste Schicht bildet, größer ist als ein 100%-Modul der Kautschukzusammensetzung, welche die zweite Schicht bildet, wobei der 100%-Modul gemäß dem in der Beschreibung angegebenen Verfahren gemessen ist.

6. Reifen nach einem der Ansprüche 1 bis 5, wobei 70°CE*1/70°C tan $\delta$1 60 oder mehr und 100 oder weniger beträgt, worin ein tan $\delta$ bei 70°C der Kautschukzusammensetzung, welche die erste Schicht bildet, als 70°C tan $\delta$1 bezeichnet

ist, und ein komplexer Elastizitätsmodul bei 70°C der Kautschukzusammensetzung, welche die erste Schicht bildet, als 70°CE*1, in MPa, bezeichnet ist, wobei der tan δ bei 70°C gemäß dem in der Beschreibung angegebenen Verfahren gemessen ist.

7.  Reifen nach einem der Ansprüche 1 bis 6, wobei t1×S1 150 oder weniger beträgt, bevorzugt 140 oder weniger, bevorzugter 120 oder weniger, weiter bevorzugt 110 oder weniger, worin ein Gesamtstyrolgehalt in der Kautschukkomponente der Kautschukzusammensetzung, welche die erste Schicht bildet, als S1, in Massen-%, bezeichnet ist.

8.  Reifen nach einem der Ansprüche 1 bis 7, wobei I/C 1,0 oder mehr beträgt, bevorzugt 1,4 oder mehr, bevorzugter 1,8 oder mehr, weiter bevorzugt 2,0 oder mehr, worin ein Gehalt eines Isopren-basierten Kautschuks in der Kautschukkomponente der Kautschukzusammensetzung, welche die erste Schicht bildet, als I, in Massen-%, bezeichnet ist.

9.  Reifen nach einem der Ansprüche 1 bis 8, wobei eine Shore-Härte Hs der Kautschukzusammensetzung, welche die erste Schicht bildet, größer als 60 und kleiner als 80 ist und größer als eine Shore-Härte Hs der Kautschukzusammensetzung ist, welche die zweite Schicht bildet, wobei die Shore-Härte Hs gemäß dem in der Beschreibung angegebenen Verfahren gemessen ist.

10. Reifen nach einem der Ansprüche 1 bis 9, wobei der rückgewonnene Ruß ein aus dem Brennen eines Abfallreifens und/oder eines Abfallreifenschlauchs entstandener rückgewonnener Ruß ist.

11. Reifen nach Anspruch 10, wobei der Abfallreifen und/oder der Abfallreifenschlauch einen Dien-basierten Kautschuk umfasst.

12. Reifen nach einem der Ansprüche 1 bis 11, wobei der Reifen ein Reifen für einen Personenkraftwagen ist.

13. Reifen nach einem der Ansprüche 1 bis 12,

    wobei der Laufstreifenteil umfasst:

        ein Paar Schulterpositivprofilteile, die durch zwei oder mehr Umfangsrillen abgetrennt sind, welche sich durchgehend in einer Reifenumfangsrichtung erstrecken, eine äußerste Umfangsrille, die sich von den zwei oder mehr Umfangsrillen auf der äußersten Seite in einer Reifenbreitenrichtung befindet, und Bodenkontakt- Enden, und
        einen Zentrumspositivprofilteil, der sich zwischen dem Paar Schulterpositivprofilteile befindet, und

    wobei eine Fläche eines innenseitigen Zentrumspositivprofilteils von einer Fläche eine außenseitigen Zentrumspositivprofilteils verschieden ist, worin, beim Montieren des Reifens an einem Fahrzeug, ein Zentrumspositivprofilteil, das sich auf einer inneren Seite des Fahrzeugs von einem Reifenäquator aus befindet, als das innenseitige Zentrumspositivprofilteil bezeichnet ist, und ein Zentrumspositivprofilteil, das sich auf einer äußeren Seite des Fahrzeugs von dem Reifenäquator aus befindet, als das außenseitige Zentrumspositivprofilteil bezeichnet ist.

## Revendications

1.  Pneumatique comprenant une partie de bande de roulement,

    dans lequel la partie de bande de roulement comprend une première couche constituant une surface de bande de roulement, et une seconde couche adjacente à un côté interne de la première couche dans une direction radiale de pneumatique,
    dans lequel chacune de la première couche et de la seconde couche est composée d'une composition de caoutchouc comprenant un composant de caoutchouc et un noir de charbon récupéré, et
    dans lequel B/C est plus grand que 1,0, où une teneur du noir de charbon récupéré sur la base de 100 parties en masse d'un composant de caoutchouc d'une composition de caoutchouc constituant la première couche est rapportée comme C, en parties en masse, et une teneur du noir de charbon récupéré sur la base de 100 parties en masse d'un composant de caoutchouc d'une composition de caoutchouc constituant la seconde couche est rapportée comme B, en parties en masse,
    dans lequel le terme « noir de charbon récupéré » se rapporte au noir de charbon qui est obtenu en pulvérisant un produit comprenant du noir de charbon et en brûlant le produit pulvérisé, dans lequel, lorsque le produit est soumis à une combustion oxydative par chauffage dans l'air, en utilisant un procédé de mesure de poids thermique selon la norme JIS K 6226-2 : 2003, un rapport d'une masse de cendre, qui est un composant qui ne brûle pas, est de 13 % en masse ou plus.

2. Pneumatique selon la revendication 1, dans lequel un rapport de $t_2$ à une somme de $t_1$ et $t_2$ ($t_2/(t_1+t_2)$) est de 0,20 ou plus, de préférence de 0,25 ou plus, davantage de préférence de 0,30 ou plus, encore de préférence de 0,35 ou plus, où une épaisseur de la première couche est rapportée comme $t_1$, en mm, et une épaisseur de la seconde couche est rapportée comme $t_2$, en mm.

3. Pneumatique selon la revendication 1 ou 2, dans lequel $B \times t_2/(t_1+t_2)$ est de 3,0 ou plus, de préférence de 3,5 ou plus, où une épaisseur de la première couche est rapportée comme $t_1$, en mm, et une épaisseur de la seconde couche est rapportée comme $t_2$, en mm.

4. Pneumatique selon l'une quelconque des revendications 1 à 3, dans lequel $70°CE^{*}2/70°CE^{*}1$ est de 0,70 ou moins, où un module élastique complexe à 70 °C de la composition de caoutchouc constituant la première couche est rapportée come $70°CE^{*}1$, en Mpa, et un module élastique complexe à 70 °C de la composition de caoutchouc constituant la seconde couche est rapporté comme $70°CE^{*}2$, en MPa, dans lequel le module élastique complexe à 70 °C est mesuré selon le procédé donné dans la description.

5. Pneumatique selon l'une quelconque des revendications 1 à 4, dans lequel un module de 100 % de la composition de caoutchouc constituant la première couche est plus grand qu'un module de 100 % de la composition de caoutchouc constituant la seconde couche, dans lequel le module de 100 % est mesuré selon le procédé donné dans la description.

6. Pneumatique selon l'une quelconque des revendications 1 à 5, dans lequel $70°CE^{*}1/70°C\tan\delta1$ est de 60 ou plus et de 100 ou moins, où une $\tan\delta$ à 70 °C de la composition de caoutchouc constituant la première couche est rapportée comme $70 °C \tan\delta1$, et un module élastique complexe à 70 °C de la composition de caoutchouc constituant la première couche est rapportée comme $70°CE^{*}1$, en MPa, dans lequel la $\tan\delta$ à 70 °C est mesurée selon le procédé donné dans la description.

7. Pneumatique selon l'une quelconque des revendications 1 à 6, dans lequel $t_1 \times S_1$ est de 150 ou moins, de préférence de 140 ou moins, davantage de préférence de 120 ou moins, encore de préférence de 110 ou moins, où une quantité de styrène totale dans le composant de caoutchouc de la composition de caoutchouc constituant la première couche est rapportée comme $S_1$, en % en masse.

8. Pneumatique selon l'une quelconque des revendications 1 à 7, dans lequel $I/C$ est de 1,0 ou plus, de préférence de 1,4 ou plus, davantage de préférence de 1,8 ou plus, encore de préférence de 2,0 ou plus, où une teneur d'un caoutchouc à base d'isoprène dans le composant de caoutchouc de la composition de caoutchouc constituant la première couche est rapportée comme $I$, en % en masse.

9. Pneumatique selon l'une quelconque des revendications 1 à 8, dans lequel une dureté de Shore Hs de la composition de caoutchouc constituant la première couche est plus grande que 60 et de moins de 80 et est plus grande qu'une dureté de Shore Hs de la composition de caoutchouc constituant la seconde couche, dans lequel la dureté de Shore Hs est mesurée selon le procédé donné dans la description.

10. Pneumatique selon l'une quelconque des revendications 1 à 9, dans lequel le noir de charbon récupéré est un noir de charbon récupéré résultant du brûlage d'un pneumatique de déchet et/ou d'un tube de pneumatique de déchet.

11. Pneumatique selon la revendication 10, dans lequel le caoutchouc de déchet et/ou le tube de caoutchouc de déchet comprend un caoutchouc à base de diène.

12. Pneumatique selon l'une quelconque des revendications 1 à 11, dans lequel le pneumatique est un pneumatique pour voiture particulière.

13. Pneumatique selon l'une quelconque des revendications 1 à 12,

dans lequel la partie de bande de roulement comprend

une paire de parties d'appui d'épaulement partitionnées par deux ou plus de deux rainures circonférentielles s'étendant en continu dans une direction circonférentielle de pneumatique, une rainure circonférentielle la plus externe qui est située sur le côté le plus externe dans une direction de largeur de pneumatique parmi les deux ou plus de deux rainures circonférentielles et les extrémités contactant le sol, et

une partie de bord d'appui centrale entre la paire de parties d'appui d'épaulement, et

dans lequel une région d'une partie d'appui centrale de côté interne est différente d'une région d'une partie d'appui centrale de côté externe, où, lors du montage à un véhicule, une partie d'appui centrale située sur un côté interne du véhicule d'un équateur de pneumatique est rapportée comme la partie d'appui centrale de côté interne, et une d'appui centrale centrale située sur un côté externe du véhicule de l'équateur de pneumatique est rapportée comme la partie d'appui centrale de côté externe.

# FIG. 1

# FIG.2

# FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021160669 A
- EP 3427975 A
- JP 6856781 B
- EP 3173251 A

**Non-patent literature cited in the description**

- *Rubber Chemistry and Technology*, 2012, vol. 85 (3), 408-449
- A Comparison of Surface Morphology and Chemistry of Pyrolytic Carbon Blacks with Commercial Carbon Blacks. *Powder Technology*, 2005, vol. 160, 190-193